(19) **Europäisches Patentamt European Patent Office Office européen des brevets**

(11) **EP 4 105 877 B1**

(12) **EUROPEAN PATENT SPECIFICATION**

(45) Date of publication and mention
of the grant of the patent:
**01.04.2026 Bulletin 2026/14**

(21) Application number: **21757305.4**

(22) Date of filing: **19.02.2021**

(51) International Patent Classification (IPC):
**G06T 5/60** *(2024.01)*      **G06T 5/92** *(2024.01)*
**G06T 3/4046** *(2024.01)*      **G06T 3/4053** *(2024.01)*
**G06N 3/0455** *(2023.01)*      **G06N 3/0464** *(2023.01)*
**G06N 3/084** *(2023.01)*      **G06N 3/09** *(2023.01)*

(52) Cooperative Patent Classification (CPC):
**G06T 3/4053; G06N 3/0455; G06N 3/0464;
G06N 3/084; G06N 3/09; G06T 3/4046; G06T 5/60;
G06T 5/92;** G06T 2207/10024; G06T 2207/20081;
G06T 2207/20084; G06T 2207/20208;
G06T 2207/30252

(86) International application number:
**PCT/CN2021/076859**

(87) International publication number:
**WO 2021/164731 (26.08.2021 Gazette 2021/34)**

(54) **IMAGE ENHANCEMENT METHOD AND IMAGE ENHANCEMENT APPARATUS**

BILDVERBESSERUNGSVERFAHREN UND BILDVERBESSERUNGSVORRICHTUNG

PROCÉDÉ D'AMÉLIORATION D'IMAGE ET APPAREIL D'AMÉLIORATION D'IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.02.2020 CN 202010102590**

(43) Date of publication of application:
**21.12.2022 Bulletin 2022/51**

(73) Proprietor: **Huawei Technologies Co., Ltd.
Longgang
Shenzhen, Guangdong 518129 (CN)**

(72) Inventors:
- **MA, Yipeng
 Shenzhen, Guangdong 518129 (CN)**
- **WANG, Tao
 Shenzhen, Guangdong 518129 (CN)**
- **PENG, Jingyang
 Shenzhen, Guangdong 518129 (CN)**
- **SONG, Fenglong
 Shenzhen, Guangdong 518129 (CN)**

(74) Representative: **Gill Jennings & Every LLP
The Broadgate Tower
20 Primrose Street
London EC2A 2ES (GB)**

(56) References cited:
CN-A- 109 345 485      CN-A- 109 889 800
CN-A- 109 919 869      CN-A- 109 919 869
CN-A- 110 163 807      CN-A- 110 264 424
CN-A- 110 264 424      US-A1- 2016 080 626

- ATOUM YOUSEF ET AL: "Color-wise Attention
 Network for Low-light Image Enhancement", 20
 November 2019 (2019-11-20), pages 2130 - 2139,
 XP093060601, ISBN: 978-1-7281-9360-1,
 Retrieved from the Internet <URL:https://arxiv.
 org/pdf/1911.08681v1.pdf> DOI: 10.1109/
 CVPRW50498.2020.00261
- LORE KIN GWN ET AL: "LLNet: A deep
 autoencoder approach to natural low-light image
 enhancement", PATTERN RECOGNITION,
 ELSEVIER, GB, vol. 61, 15 June 2016
 (2016-06-15), pages 650 - 662, XP029761044,
 ISSN: 0031-3203, DOI: 10.1016/
 J.PATCOG.2016.06.008

**(Cont. next page)**

EP 4 105 877 B1

- **MICHAEL GHARBI ET AL: "Deep bilateral learning for real-time image enhancement", ACM TRANSACTIONS ON GRAPHICS, ACM, NY, US, vol. 36, no. 4, 20 July 2017 (2017-07-20), pages 1 - 12, XP058372892, ISSN: 0730-0301, DOI: 10.1145/ 3072959.3073592**

**Description**

**TECHNICAL FIELD**

This application relates to the field of artificial intelligence, and more specifically, to an image enhancement method and apparatus in the field of computer vision.

**BACKGROUND**

Computer vision is an integral part of various intelligent/autonomic systems in various application fields, for example, fields such as a manufacturing industry, inspection, document analysis, medical diagnosis, and military affairs. Computer vision is knowledge about how to use a camera/video camera and a computer to obtain required data and information of a photographed subject. To be vivid, eyes (the camera/video camera) and a brain (an algorithm) are installed on the computer to replace human eyes to identify, track, and measure an object, and the like, so that the computer can perceive an environment. Perceiving may be considered as extracting information from a perceptual signal. Therefore, computer vision may also be considered as a science of studying how to make an artificial system perform "perceiving" from an image or multi-dimensional data. Generally, computer vision uses various imaging systems functioning like visual organs to obtain input information, and then the computer, functioning like a brain, processes and interprets the input information. A final study objective of computer vision is to enable a computer to observe and understand the world through vision in a way that human beings do, and have a capability of automatically adapting to an environment.

Image enhancement may also be referred to as image quality enhancement, and is an important branch in the image processing field. The image enhancement technology can improve the image quality without re-collecting data, to meet more actual application requirements. With the development of a deep learning method, in particular, image processing based on a convolutional neural network (convolutional neural network, CNN) method is a key force for promoting the development of the artificial intelligence field in recent years. A plurality of tasks of computer vision, such as image restoration or image enhancement, have achieved remarkable effect.

Currently, to meet a real-time requirement of performing image enhancement on a high-resolution image (for example, 4K resolution), a method of "downsampling + high dynamic range (high dynamic range, HDR) + super-resolution processing" is proposed to decrease computing overheads, to enhance image quality in real time. To be specific, downsampling is performed on an original-resolution input image, and the image enhancement is performed at a low resolution, to obtain a low-resolution enhanced image. Based on the original-resolution input image and the low-resolution enhanced image, an original resolution is restored by using a pre-trained CNN to obtain an original-resolution enhanced image. However, complex super-resolution is usually performed only on a luminance channel of the original-resolution input image by a deep learning-based super-resolution method, and simple upsampling is usually performed on a color channel. As a result, the image enhancement method has a problem that color, brightness, contrast, saturation, and the like of an image are inconsistent before and after the super-resolution processing is performed on the image. Therefore, when the real-time requirement of performing the image enhancement is met, how to improve quality of the enhanced image is an important problem to be resolved.

CN 109 919 869 A describes a kind of image enhancing method, device and storage medium. CN 109 345 485 A describes a kind of image enhancing method, device, electronic equipment and storage medium. CN 110 264 424 A describes a kind of fuzzy retinal fundus images enhancement method based on generation confrontation network. ATOUM YOUSEF ET AL: "Color-wise Attention Network for Low-light Image Enhancement", XP093060601 describes a color-wise attention model for low-light image enhancement which attempts to mimic the human visual system. LORE KIN GWN ET AL: "LLNet: A deep autoencoder approach to natural low-light image enhancement", XP029761044 describes a variant of a stacked sparse denoising autoencoder trained to learn brightening and denoising functions from various synthetic examples as filters which are then applied to enhance naturally low-light and degraded images. MICHAEL GHARBI ET AL: "Deep bilateral learning for real-time image enhancement", XP 058372892 describes a neural network architecture that can perform image enhancement in real time on full resolution images while still capturing high frequency effects.

**SUMMARY**

This application provides an image enhancement method and apparatus in accordance with the claims, to enhance performance of an enhanced image, such as color, brightness, contrast, saturation, and the like while meeting a real-time requirement of image enhancement processing, and improve image enhancement processing effect.

According to a first aspect, an image enhancement method is provided. The method includes: obtaining a first high dynamic range HDR image corresponding to a to-be-processed image and a color image feature of the to-be-processed image, where the color image feature indicates different luminance regions or different color change regions in the to-be-processed image, the to-be-processed image is an image of a first resolution, the first HDR image is an image of a second resolution, and the first resolution is higher than the second resolution; inputting the first HDR image into a neural network model for performing super-resolution processing; and performing, by using the neural network model, image enhancement processing on the super-resolution processed first HDR image and the color image feature, to obtain a second HDR image corresponding to the to-be-processed image, where the second HDR image is an HDR image whose resolution is the first resolution.

It should be noted that the second HDR image is an image whose resolution is the same as that of the to-be-processed image. Resolutions being the same may mean that images have a same quantity of pixels. Pixel values of at least some pixels in the to-be-processed image may be adjusted by performing the image enhancement on the to-be-processed image, so that visual effect of the second HDR image is better than that of the to-be-processed image.

The to-be-processed image may be a to-be-processed image needing to be enhanced. For example, the to-be-processed image may be a raw image whose resolution is high and image quality is poor. For example, it may mean that an obtained to-be-processed image has a poor image quality due to factors such as weather, a distance, and a photographing environment. The poor image quality includes but is not limited to: The image is blurry, or color, brightness, contrast, saturation, and the like of the image are poor.

In a possible implementation, the first HDR image may be an image obtained by performing downsampling and HDR enhancement on the to-be-processed image. Compared with a standard dynamic range (standard dynamic range, SDR) image, a high dynamic range (high dynamic range, HDR) image can provide more dynamic ranges and image colors, that is, the HDR image may include more image details.

It should be noted that the color image feature may also be referred to as a color guide map. The color image feature has more detailed guide information about a difficult region (for example, a bright region or a dark region) in the to-be-processed image that is input into the neural network model, so that the neural network model may pay more attention to enhancement effect of the difficult region during learning.

In this embodiment of this application, the to-be-processed image and the first HDR image of the to-be-processed image may be obtained, where the first HDR image is a low-resolution enhanced image corresponding to the to-be-processed image; the super-resolution processing is performed on the first HDR image by using the neural network model based on the color image feature of the to-be-processed image, to obtain an enhanced image whose resolution is the same as that of the to-be-processed image, that is, the second HDR image; and a color attention mechanism, that is, the color image feature, may be introduced when the super-resolution processing is performed on the first HDR image. In the image enhancement process, this improves restoration effect of the neural network model on the color, the brightness, the contrast, the saturation, and the like of the difficult region (an overbright region and an overdark region) in the to-be-processed image, and improves the image enhancement effect.

With reference to the first aspect, in some implementations of the first aspect, the method further includes: obtaining a texture image feature of the to-be-processed image, where the texture image feature indicates an edge region or a texture region of the to-be-processed image; and

the inputting the first HDR image into a neural network model for performing super-resolution processing includes: performing, by using the neural network model, the super-resolution processing on the first HDR image based on the texture image feature.

It should be noted that a texture attention mechanism is introduced into the neural network model to allow the neural network model to learn details such as edges and textures in an image. The texture image feature is also referred to as a texture guide map and can improve learning by the neural network model of a region with a high weight in the texture guide map. Therefore, performing the super-resolution processing on the first HDR image can improve a capability of restoring image texture details by a super-resolution algorithm, and this avoids image blur or another sensory difference introduced after the super-resolution processing is performed.

In this embodiment of this application, in the process of performing the super-resolution processing on the first HDR image, super-resolution and restoration processing may be performed according to a dual attention mechanism. The dual attention mechanism may include a texture attention mechanism and a color attention mechanism. To be specific, when the color image feature and the texture image feature are used in the super-resolution processing process performed on the first HDR image, color, brightness, saturation, contrast, texture details, and the like of a finally obtained enhanced image, that is, the second HDR image of the to-be-processed image, are the same as or similar to those of a truth image, so that the image enhancement effect is improved.

With reference to the first aspect, in some implementations of the first aspect, the method further includes: obtaining a multi-scale image feature of the to-be-processed image, where the multi-scale image feature indicates image information of the to-be-processed image at different scales, and a scale of any one image feature in the multi-scale image feature is different; and

the inputting the first HDR image into a neural network model for performing super-resolution processing includes: performing, by using the neural network model, the super-resolution processing on the first HDR image based on the multi-scale image feature.

The multi-scale image feature may be image features of different resolutions. More image detail information may be introduced into the neural network model by introducing the multi-scale image feature, to restore details of the first HDR image.

It should be noted that the multi-scale image feature may indicate image information of the to-be-processed image at different scales. The different scales may refer to different resolutions, and the image information may refer to high-frequency information in the image. For example, the high-frequency information may include one or more of edge information, detail information, and texture information in the image.

In this embodiment of this application, the multi-scale image feature of the to-be-processed image may be obtained, to be specific, multi-scale image feature information of the to-be-processed image may be extracted by reducing feature dimensions of the to-be-processed image from an original resolution. During the super-resolution processing, multi-scale super-resolution and restoration may be performed based on the multi-scale feature of the first HDR image, that is, a low-resolution HDR image, and the to-be-processed image, that is, a raw input image, and then the extracted feature information at a corresponding scale of the low-resolution HDR image and the raw input image may be fused, to obtain the second HDR image of the to-be-processed image, that is, an enhanced image obtained after the enhancement processing is performed on the to-be-processed image.

With reference to the first aspect, in some implementations of the first aspect, the method further includes: obtaining a texture image feature of the to-be-processed image, where the texture image feature indicates an edge region or a texture region of the to-be-processed image; and

obtaining a multi-scale image feature of the to-be-processed image, where the multi-scale image feature indicates image information of the to-be-processed image at different scales, and a scale of any one image feature in the multi-scale image feature is different; and
the inputting the first HDR image into a neural network model for performing super-resolution processing includes: performing, by using the neural network model, the super-resolution processing on the first HDR image based on the texture image feature.

In this embodiment of this application, both the dual attention mechanism and the multi-scale image feature may be introduced in the process of performing the super-resolution processing on the first HDR image. The dual attention mechanism may include the texture attention mechanism and the color attention mechanism, that is, the color image feature and the texture feature. When the dual attention mechanism and the multi-scale image feature are used, color, brightness, saturation, contrast, texture details, and the like of a finally obtained enhanced image, that is, the second HDR image of the to-be-processed image, are the same as or similar to those of a truth image, so that the image enhancement effect is improved, that is, quality of the enhanced image is improved.

With reference to the first aspect, in some implementations of the first aspect, the performing, by using the neural network model, the super-resolution processing on the first HDR image based on the texture image feature and the multi-scale image feature includes:

obtaining a texture image feature at a first scale, where a scale of the texture image feature at the first scale is the same as that of a first-scale image feature in a multi-scale image;
performing, by using the neural network model, a dot product on the first HDR image and the texture image feature at the first scale, to obtain a third image feature; and
performing, by using the neural network model, a channel combination operation, a convolution operation, and an upsampling operation on the third image feature and the first-scale image feature.

With reference to the first aspect, in some implementations of the first aspect, the performing, by using the neural network model, image enhancement processing on the super-resolution processed first HDR image and the color image feature, to obtain a second HDR image corresponding to the to-be-processed image includes:
performing, by using the neural network model, the dot product operation and the convolution operation on the super-resolution processed first HDR image and the color image feature, to obtain the second HDR image.

According to a second aspect, an image enhancement method is provided. The method is applied to a smart screen (or an artificial intelligence screen), including: detecting a first operation of instructing by a user to open a display mode interface of the smart screen; displaying a display mode selection interface on the smart screen in response to the first operation; detecting a second operation of instructing by the user to start a first display mode; and displaying an output image on the smart screen in response to the second operation, where the output image is a second high dynamic range HDR image obtained after image enhancement processing is performed on a to-be-processed image, and a neural network model is applied to the image enhancement processing; inputting a first high dynamic range HDR image corresponding to the to-be-processed image into the neural network model for performing super-resolution processing; and performing, by using the neural network model, image enhancement processing on the super-resolution processed first HDR image and a color image feature, to obtain a second HDR image corresponding to the to-be-processed image, where the to-be-processed image is an image of a first resolution, the first HDR image is an image of a second resolution, and the first resolution is higher than the second resolution. The second HDR image is an HDR image whose resolution is the first resolution. The color image feature indicates different luminance regions or different color change regions in the to-be-processed image.

Optionally, the display mode interface may include but is not limited to the following display modes: an HDR mode, a Dolby mode, an UHD mode, a Blu-ray mode, and an intelligent mode.

It should be understood that the output image is the second HDR image obtained after the image enhancement processing is performed on the to-be-processed image, that is, an HDR image whose resolution is the same as that of the to-be-processed image. The to-be-processed image may be an image/video shot by an electronic device through a camera. Alternatively, the to-be-processed image may be an image obtained from inside the electronic device (for example, an image stored in an album of the electronic device, or a picture obtained by the electronic device from a cloud). For example, the to-be-processed image may be an original source stored in a database, or may be a source played in real time.

In a possible implementation, the image enhancement method performed for the to-be-processed image may be an offline method performed on the cloud. For example, a cloud server may perform image enhancement on the to-be-processed image to obtain the output image, and display the output image on the smart screen.

In another possible implementation, the image enhancement method may be performed by a local device, that is, the output image may be obtained by performing image enhancement on the to-be-processed image on the smart screen. In a possible implementation, a first operation of instructing by a user to open a display mode interface of the smart screen may include but is not limited to: behavior that a control device indicates the smart screen to open the display mode interface, behavior that the user instructs the smart screen to open the display mode interface through voice, or behavior that the user instructs the smart screen to open the display mode interface by another method. The foregoing descriptions are examples, and do not constitute any limitation on this application.

Similarly, a second operation of instructing by the user to start a first display mod may include but is not limited to: behavior that the control device indicates the smart screen to open the first display mode on the display mode interface, behavior that the user instructs to start the first display mode on the display mode interface through voice, or behavior that the user instructs to start the first display mode on the display mode interface by another method. The foregoing descriptions are examples, and do not constitute any limitation on this application.

The first display mode may be an HDR mode or another professional mode. The image enhancement method provided in this embodiment of this application may be implemented through the first display mode, to improve quality of the output image, so that the user using the smart screen can obtain better visual experience.

It should be noted that a specific process of performing feature enhancement processing on the to-be-processed image may be obtained according to the first aspect and any implementation of the first aspect.

With reference to the second aspect, in some implementations of the second aspect, the method further includes: obtaining a texture image feature of the to-be-processed image, where the texture image feature indicates an edge region or a texture region of the to-be-processed image; and

the inputting the first HDR image into a neural network model for performing super-resolution processing includes: performing, by using the neural network model, the super-resolution processing on the first HDR image based on the texture image feature.

With reference to the second aspect, in some implementations of the second aspect, the method further includes: obtaining a multi-scale image feature of the to-be-processed image, where the multi-scale image feature indicates image information of the to-be-processed image at different scales, and a scale of any one image feature in the multi-scale image feature is different; and

the inputting the first HDR image into a neural network model for performing super-resolution processing includes: performing, by using the neural network model, the super-resolution processing on the first HDR image based on the multi-scale image feature.

With reference to the second aspect, in some implementations of the second aspect, the method further includes: obtaining a texture image feature of the to-be-processed image, where the texture image feature indicates an edge region or a texture region of the to-be-processed image; and

obtaining a multi-scale image feature of the to-be-processed image, where the multi-scale image feature indicates image information of the to-be-processed image at different scales, and a scale of any one image feature in the multi-scale image feature is different; and

the inputting the first HDR image into a neural network model for performing super-resolution processing includes: performing, by using the neural network model, the super-resolution processing on the first HDR image based on the texture image feature and the multi-scale image feature.

It should be understood that the multi-scale image feature may indicate image information of the to-be-processed image at different scales. The different scales may refer to different resolutions, and the image information may refer to high-frequency information in the image. For example, the high-frequency information may include one or more of edge information, detail information, and texture information in the image.

With reference to the second aspect, in some implementations of the second aspect, the performing, by using the neural network model, the super-resolution processing on the first HDR image based on the texture image feature and the multi-scale image feature includes:

obtaining a texture image feature at a first scale, where a scale of the texture image feature at the first scale is the same as that of a first-scale image feature in a multi-scale image;
performing, by using the neural network model, a dot product on the first HDR image and the texture image feature at the first scale, to obtain a third image feature; and
performing, by using the neural network model, a channel combination operation, a convolution operation, and an upsampling operation on the third image feature and the first-scale image feature.

With reference to the second aspect, in some implementations of the second aspect, the performing, by using the neural network model, image enhancement processing on the super-resolution processed first HDR image and the color image feature, to obtain a second HDR image corresponding to the to-be-processed image includes:
performing, by using the neural network model, the dot product operation and the convolution operation on the super-resolution processed first HDR image and the color image feature, to obtain the second HDR image.

According to a third aspect, an image enhancement method is provided. The method is applied to an electronic device having a display and a camera. The method includes: detecting a second operation of instructing by a user to the camera; in response to the second operation, displaying an output image on the display, or storing the output image in the electronic device, where the output image is a second high dynamic range HDR image obtained after image enhancement processing is performed on a to-be-processed image, and a neural network model is applied to image enhancement processing; inputting a first high dynamic range HDR image corresponding to a to-be-processed image into the neural network model for performing super-resolution processing; and performing, by using the neural network model, image enhancement processing on the super-resolution processed first HDR image and a color image feature, to obtain a second HDR image corresponding to the to-be-processed image, where the to-be-processed image is an image of a first resolution, the first HDR image is an image of a second resolution, and the first resolution is higher than the second resolution. The second HDR image is an HDR image whose resolution is the first resolution. The color image feature indicates different luminance regions or different color change regions in the to-be-processed image.

Optionally, the method may further include: detecting a first operation of starting the camera by the user; and displaying a photographing screen on the display in response to the first operation, where the photographing screen includes a viewfinder frame, and the to-be-processed image is in the viewfinder frame.

A specific process of performing feature enhancement processing on the to-be-processed image may be obtained according to the first aspect and any implementation of the first aspect.

In a possible implementation, the image enhancement method provided in this embodiment of this application may be applied to the intelligent terminal photographing field. The image enhancement method in this embodiment of this application improves performance such as color, brightness, contrast, saturation, and the like of an output image obtained after image enhancement processing.

For example, when photographing in real time, the intelligent terminal performs image enhancement processing on an obtained raw image, and displays the enhanced image on a screen of the intelligent terminal. Alternatively, the intelligent terminal stores, by performing the enhancement processing on the obtained raw image, the enhanced image in an album of the intelligent terminal.

According to a fourth aspect, an image enhancement method is provided. The method includes: obtaining a to-be-processed road image and a first high dynamic range HDR image corresponding to the road image, where the road image is an image of a first resolution, the first HDR image is an image of a second resolution, and the first resolution is higher than the second resolution; inputting the road image into a neural network model to obtain a color image feature of the road image, where the color image feature indicates different luminance regions or different color change regions in the road image; inputting the first HDR image into the neural network model for performing super-resolution processing; processing, by using the neural network model, the super-resolution processed first HDR image and the color image feature, to obtain a second HDR image corresponding to the road image, where the second HDR image is an HDR image whose resolution is the first resolution; and identifying road information in the second HDR image based on the second HDR image.

It should be noted that a specific process of performing feature enhancement processing on the road image may be obtained according to the first aspect and any implementation of the first aspect.

In a possible implementation, the image enhancement method provided in this embodiment of this application may be applied to the autonomous driving field. For example, the image enhancement method may be applied to a navigation system of an autonomous vehicle. The image enhancement method in this application may enable the autonomous vehicle to perform, in a navigation process while moving on a road, image enhancement processing on an obtained original road image with poor image quality, to obtain an enhanced road image. This ensures safety of the autonomous vehicle.

According to a fifth aspect, an image enhancement method is provided. The method includes: obtaining a to-be-processed street view image and a first high dynamic range HDR image corresponding to the street view image, where the street view image is an image of a first resolution, the first HDR image is an image of a second resolution, and the first resolution is higher than the second resolution; inputting the street view image into a neural network model to obtain a color image feature of the street view image, where the color image feature indicates different luminance regions or different color change regions in the street view image; inputting the first HDR image into the neural network model for performing super-resolution processing; processing, by using the neural network model, the super-resolution processed first HDR image and the color image feature, to obtain a second HDR image corresponding to the street view image, where the second HDR image is an HDR image whose resolution is the first resolution; and identifying street view information in the second HDR image based on the second HDR image.

A specific process of performing the feature enhancement processing on the street view image may be obtained according to the first aspect and any implementation of the first aspect.

In a possible implementation, the image enhancement method provided in this embodiment of this application may be applied to the security protection field. For example, the image enhancement method in this embodiment of this application may be applied to surveillance image enhancement for a safe city. For example, an image (or a video) captured by a surveillance device in a public place is usually affected by factors such as weather and a distance, and therefore the image is blurry, and image quality is poor. The image enhancement method in this application may perform image enhancement on a captured raw image, so that important information such as a license plate number and a clear face can be restored for public security personnel, to provide important clue information for case investigation.

It should be understood that extension, limitation, explanation, and description of related content in the first aspect are also applicable to same content in the second aspect, the third aspect, the fourth aspect, and the fifth aspect.

According to a sixth aspect, an image enhancement apparatus is provided. The apparatus includes a module/unit configured to perform the image enhancement method in any one of the first aspect to the fifth aspect and the implementations of the first aspect to the fifth aspect.

According to a seventh aspect, an image enhancement apparatus is provided. The apparatus includes: a memory, configured to store a program; and processor, configured to execute the program stored in the memory, where when the program stored in the memory is executed, the processor is configured to: obtain a first high dynamic range HDR image corresponding to a to-be-processed image and a color image feature of the to-be-processed image, where the color image feature indicates different luminance regions or different color change regions in the to-be-processed image, the to-be-processed image is an image of a first resolution, the first HDR image is an image of a second resolution, and the first resolution is higher than the second resolution; input the first HDR image into a neural network model for performing super-resolution processing; and perform, by using the neural network model, image enhancement processing on the super-resolution processed first HDR image and the color image feature, to obtain a second HDR image corresponding to the to-be-processed image, where the second HDR image is an HDR image whose resolution is the first resolution.

In a possible implementation, the processor included in the image enhancement apparatus is further configured to perform the image enhancement method according to any one of the first aspect to the fifth aspect and the implementations of the first aspect to the fifth aspect.

According to an eighth aspect, a computer-readable medium is provided. The computer-readable medium stores program code for being executed by a device, where the program code includes the image enhancement method in any one of the first aspect to the fifth aspect and the possible implementations of the first aspect to the fifth aspect.

According to a ninth aspect, a computer program product including instructions is provided. When the computer program product is run on a computer, the computer is enabled to execute the image enhancement method in any one of the first aspect to the fifth aspect and the possible implementations of the first aspect to the fifth aspect.

According to a tenth aspect, a chip is provided. The chip includes a processor and a data interface. The processor is configured to read instructions stored in a memory through a data interface, and perform the image enhancement method in any one of the first aspect to the fifth aspect and the implementations of the first aspect to the fifth aspect.

Optionally, in an implementation, the chip may further include a memory. The memory stores the instructions, and the processor is configured to execute the instructions stored in the memory. When the instructions are executed, the processor is configured to perform the image enhancement method in any one of the first aspect to the fifth aspect and the implementations of the first aspect to the fifth aspect.

**BRIEF DESCRIPTION OF DRAWINGS**

FIG. 1 is a schematic diagram of an artificial intelligence main framework according to an embodiment of this application;

FIG. 2 is a schematic diagram of an application scenario according to an embodiment of this application;

FIG. 3 is a schematic diagram of another application scenario according to an embodiment of this application;

FIG. 4 is a schematic diagram of still another application scenario according to an embodiment of this application;

FIG. 5 is a schematic diagram of yet another application scenario according to an embodiment of this application;

FIG. 6 is a schematic diagram of a structure of a system architecture according to an embodiment of this application;

FIG. 7 is a schematic diagram of a structure of a convolutional neural network according to an embodiment of this application;

FIG. 8 is a schematic diagram of a hardware structure of a chip according to an embodiment of this application;

FIG. 9 is a schematic diagram of a system architecture according to an embodiment of this application;

FIG. 10 is a schematic diagram of an image enhancement processing according to an embodiment of this application;

FIG. 11 is a schematic diagram of a system architecture of an image enhancement method according to an embodiment of this application;

FIG. 12 is a schematic flowchart of an HDR correction based on a color guide map according to an embodiment of this application;

FIG. 13 is a schematic diagram of a system architecture of an image enhancement method according to an embodiment of this application;

FIG. 14 is a schematic diagram of an extraction process of texture guide map according to an embodiment of this application;

FIG. 15 is a schematic diagram of a system architecture of another image enhancement method according to an embodiment of this application;

FIG. 16 is a schematic flowchart of self-guided multi-level super-resolution processing according to an embodiment of this application;

FIG. 17 is a schematic diagram of an HDR correction based on a color guide map after a multi-scale image feature is introduced according to an embodiment of this application;

FIG. 18 is a schematic diagram of an assessment result of image enhancement quality according to an embodiment of this application;

FIG. 19 is a schematic diagram of an assessment result of image enhancement quality according to an embodiment of this application;

FIG. 20 is a schematic diagram of an assessment result of image enhancement quality according to an embodiment of this application;

FIG. 21 is a schematic block diagram of an image enhancement apparatus according to an embodiment of this application; and

FIG. 22 is a schematic diagram of a hardware structure of an image enhancement apparatus according to an embodiment of this application.

## DESCRIPTION OF EMBODIMENTS

The following describes the technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

It should be understood that an image in the embodiments of this application may be a static image (or referred to as a static picture) or a moving image (or referred to as a moving picture). For example, the image in this application may be a video or a moving picture, or the image in this application may be a static picture or photo. For ease of description, the static image or the moving image is collectively referred to as an image in the following embodiments of this application.

It should be further understood that, in the embodiments of this application, "first", "second", "third", and the like are merely intended to represent different objects, and do not imply another limitation on the represented objects.

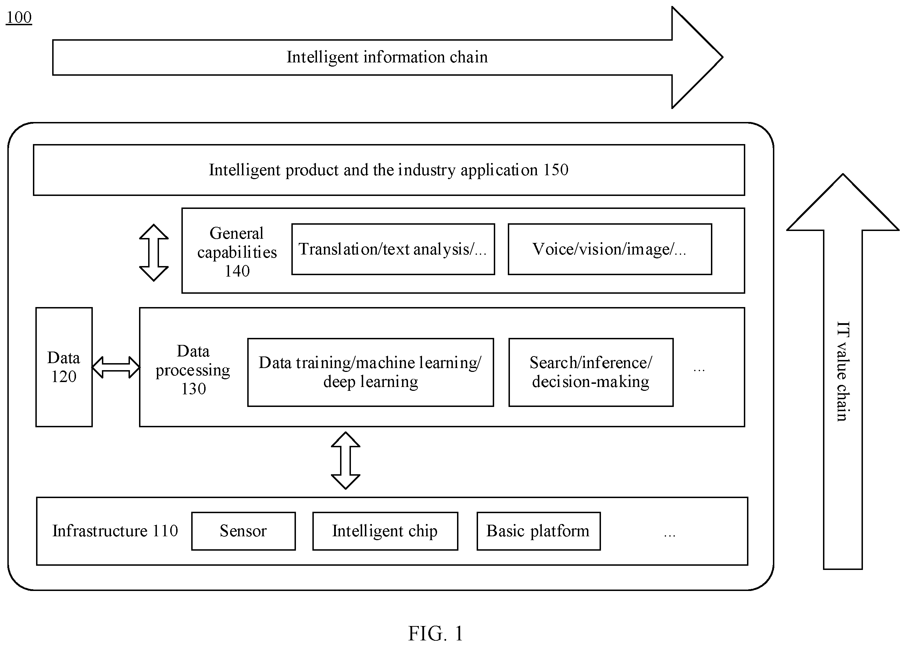

FIG. 1 is a schematic diagram of an artificial intelligence main framework. The main framework describes an overall working procedure of an artificial intelligence system, and is applicable to a requirement of a general artificial intelligence field.

The following describes in detail the artificial intelligence main framework 100 from two dimensions: an "intelligent information chain" (horizontal axis) and an "information technology (information technology, IT) value chain" (vertical axis).

The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, data undergoes a condensation process of "data-information-knowledge-wisdom".

The "IT value chain" reflects a value brought by artificial intelligence to the information technology industry from an underlying infrastructure and information (providing and processing technology implementation) of human intelligence to an industrial ecological process of a system.

(1) Infrastructure 110

The infrastructure provides computing capability support for the artificial intelligence system, implements communication with the external world, and implements support by using a base platform.

The infrastructure can communicate with the outside by using a sensor, and a calculation capability of the infrastructure can be provided by an intelligent chip.

The intelligent chip herein may be a hardware acceleration chip such as a central processing unit (central processing unit, CPU), a neural-network processing unit (neural-network processing unit, NPU), a graphics processing unit (graphics processing unit, GPU), an application-specific integrated circuit (application-specific integrated circuit, ASIC), or a field programmable gate array (field programmable gate array, FPGA).

The basic platform of the infrastructure may include related platforms, for example, a distributed computing framework and a network, for assurance and support, including cloud storage and computing, an interconnection network, and the like.

For example, the infrastructure can communicate with the outside by using the sensor, to obtain data. Then, the data is provided to an intelligent chip in a distributed computing system provided by the basic platform, for computing.

(2) Data 120

Data at an upper layer of the infrastructure indicates a data source in the field of artificial intelligence. The data relates to a graph, an image, voice, and text, further relates to internet of things data of a conventional device, and includes service data of an existing system and perception data such as force, displacement, a liquid level, a temperature, and humidity.

(3) Data processing 130

The foregoing data processing usually includes a processing manner such as data training, machine learning, deep learning, search, inference, or decision-making.

Machine learning and deep learning may mean performing symbolic and formalized intelligent information modeling, extraction, preprocessing, training, and the like on data.

Inference is a process in which a human intelligent inferring manner is simulated in a computer or an intelligent system, and machine thinking and problem resolving are performed by using formal information according to an inferring control policy. A typical function is searching and matching.

Decision-making is a process in which a decision is made after intelligent information is inferred, and usually provides functions such as classification, ranking, and prediction.

(4) General capability 140

After data processing mentioned above is performed on data, some general capabilities may be further formed based on a data processing result, for example, an algorithm or a general system, such as translation, text analysis, computer vision processing, speech recognition, and image recognition.

(5) Intelligent product and industry application 150

The intelligent product and the industry application are a product and an application of the artificial intelligence system in various fields, and are package of an overall solution of the artificial intelligence, so that decision-making for intelligent information is productized and an application is implemented. Application fields mainly include smart manufacturing, smart transportation, smart home, smart health care, smart security protection, autonomous driving, safe city, intelligent terminal, and the like.

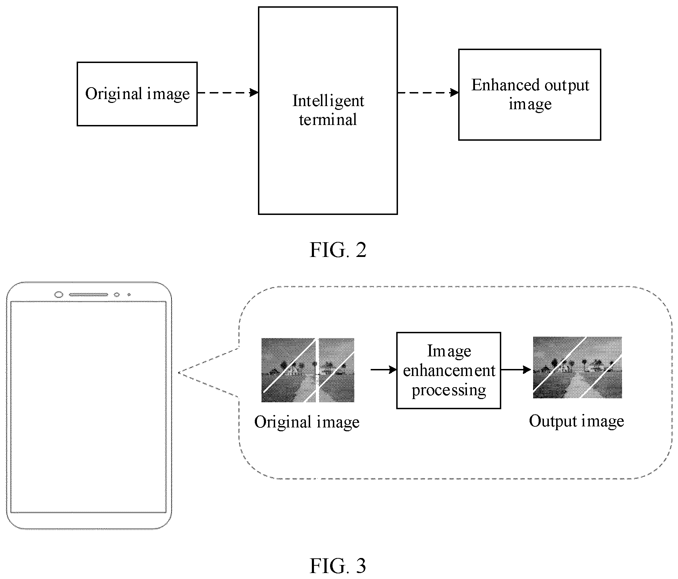

FIG. 2 is a schematic diagram of an application scenario of an image enhancement method according to an embodiment of this application.

As shown in FIG. 2, the technical solutions in this embodiment of this application may be applied to an intelligent terminal. The image enhancement method in this embodiment of this application may perform image enhancement processing on an input image (or an input video), to obtain an output image (or an output video) that is obtained after the image enhancement processing is performed on the input image (or the input video).

The intelligent terminal may be mobile or fixed. For example, the intelligent terminal may be a mobile phone, a tablet personal computer (tablet personal computer, TPC), a media player, a smart television, a laptop computer (laptop computer, LC), a personal digital assistant (personal digital assistant, PDA), a personal computer (personal computer, PC), a camera, a video camera, a smart watch, an augmented reality (augmented reality, AR)/virtual reality (virtual reality, VR), a wearable device (wearable device, WD), or an autonomous vehicle. This is not limited in this embodiment of the present invention.

It should be noted that, in this embodiment of this application, image enhancement may also be referred to as image quality enhancement, and may be specifically processing brightness, color, contrast, saturation, a dynamic range, and/or the like of an image, so that indicators of the image can meet a preset condition or a preset indicator. In this embodiment of this application, image enhancement and image quality enhancement have a same meaning.

The following briefly describes application scenarios of embodiments of this application by using examples.

Application scenario 1: smart screen (AI screen)

In an embodiment, the image enhancement method in this embodiment of this application may be further applied to the smart screen field. The smart screen is different from a conventional television and free from category restraints of a large screen. With the emergence of new products such as a smart screen, mobile phones and smart screens are becoming the pivot of smart life of users in the future. The mobile phones are still user personal centers, while the smart screens may become emotional centers of families. The smart screens will play more roles in homes. The smart screens are at the heart of your home entertainment, information sharing, control management, and multi-device interaction. For example, when a video is played by using the smart screen or the like, to display better image quality (picture quality), image enhancement processing may be performed on an original source of a video by using the image enhancement method in this embodiment of this application, to improve image quality of the source and obtain better visual experience.

For example, when an old movie (time of a source of the old movie is early, and image quality of the source of the old movie is poor) is played on the smart screen, the image enhancement processing may be performed on the source of the old movie by using the image enhancement method in this embodiment of this application, to bring visual experience of a modern movie. For example, the source of the old movie may be enhanced by the image enhancement method in this embodiment of this application to a high-dynamic range image (high-dynamic range, HDR) 10 or a high-quality video compliant with a Dolby vision (Dolby vision) standard.

For example, this application provides an image enhancement method. The method includes: obtaining a to-be-processed image (for example, an original source or an online source of a movie) and a first high dynamic range HDR image corresponding to the to-be-processed image, where the to-be-processed image is an image of a first resolution, the first HDR image is an image of a second resolution, and the first resolution is higher than the second resolution; inputting the to-be-processed image into a neural network model to obtain a color image feature of the to-be-processed image, where the color image feature indicates different luminance regions or different color change regions in the to-be-processed image; inputting the first HDR image into the neural network model for performing super-resolution processing; and processing, by using the neural network model, the super-resolution processed first HDR image and the color image feature, to obtain a second HDR image (for example, a source with improved image quality) corresponding to the to-be-processed image, where the second HDR image is an HDR image whose resolution is the first resolution.

For example, this application provides an image enhancement method. The method is applied to a smart screen (or an artificial intelligence screen). The method includes: detecting a first operation of instructing by a user to open a display mode interface of the smart screen; displaying a display mode selection interface on the smart screen in response to the first operation; detecting a second operation of instructing by the user to start a first display mode; and displaying an output image on the smart screen in response to the second operation, where the output image is a second high dynamic range HDR image obtained after image enhancement processing is performed on the to-be-processed image, and a neural network model is applied to image enhancement processing; inputting a first high dynamic range HDR image corresponding to a to-be-processed image into the neural network model for performing super-resolution processing; and performing, by using the neural network model, image enhancement processing on the super-resolution processed first HDR image and the color image feature, to obtain a second HDR image corresponding to the to-be-processed image, where the to-be-processed image is an image of a first resolution, the first HDR image is an image of a second resolution, and the first resolution is higher than the second resolution. The second HDR image is an HDR image whose resolution is the first resolution. The color image feature indicates different luminance regions or different color change regions in the to-be-processed image.

Optionally, the display mode interface may include but is not limited to the following display modes: an HDR mode, a Dolby mode, an UHD mode, a Blu-ray mode, and an intelligent mode.

It should be understood that the output image is the second HDR image obtained after the image enhancement processing is performed on the to-be-processed image, that is, an HDR image whose resolution is the same as that of the to-be-processed image. The to-be-processed image may be an image/video shot by an electronic device through a camera. Alternatively, the to-be-processed image may be an image obtained from inside the electronic device (for example, an image stored in an album of the electronic device, or a picture obtained by the electronic device from a cloud). For example, the to-be-processed image may be an original source stored in a database, or may be a source played in real time.

In a possible implementation, the image enhancement method performed for the to-be-processed image may be an offline method performed on the cloud. For example, a cloud server may perform image enhancement on the to-be-processed image to obtain the output image, and display the output image on the smart screen.

In another possible implementation, the image enhancement method may be performed by a local device, that is, the output image may be obtained by performing image enhancement on the to-be-processed image on the smart screen.

It should be understood the first operation of instructing by a user to open a display mode interface of the smart screen may include but is not limited to: behavior that a control device indicates the smart screen to open the display mode interface, behavior that the user instructs the smart screen to open the display mode interface through voice, or behavior that the user instructs the smart screen to open the display mode interface by another method. The foregoing descriptions are examples, and do not constitute any limitation on this application.

Similarly, a second operation of instructing by the user to start a first display mod may include but is not limited to: behavior that the control device indicates the smart screen to open the first display mode on the display mode interface, behavior that the user instructs to start the first display mode on the display mode interface through voice, or behavior that the user instructs to start the first display mode on the display mode interface by another method. The foregoing descriptions are examples, and do not constitute any limitation on this application.

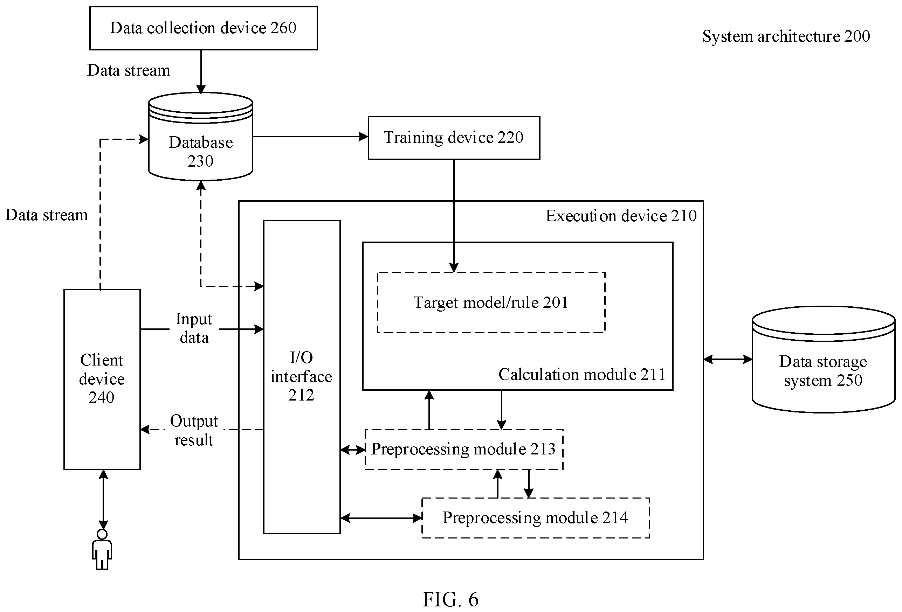

The first display mode may be an HDR mode or another professional mode. The image enhancement method provided in this embodiment of this application may be implemented through the first display mode, to improve quality of the output image, so that the user using the smart screen can obtain better visual experience. It should be noted that the image enhancement method provided in this embodiment of this application is also applicable to extension, limitation, explanation, and description of content related to the image enhancement method in the following related embodiments in FIG. 6 to FIG. 17. Details are not described herein again.

Application scenario 2: intelligent terminal photographing field

In an embodiment, as shown in FIG. 3, the image enhancement method in this embodiment of this application may be applied to photographing of an intelligent terminal device (for example, a mobile phone). According to the image enhancement method in this embodiment of this application, image enhancement processing may be performed on an obtained raw image (or a video) with poor quality, to obtain an output image (or an output video) whose image quality is improved by image enhancement processing.

It should be noted that, in FIG. 3, slashes represent a color image part, to distinguish from a grayscale image part.

For example, when the intelligent terminal photographs in real time by the image enhancement method in this embodiment of this application, image enhancement processing may be performed on an obtained raw image, and an enhanced output image is displayed on a screen of the intelligent terminal.

For example, the image enhancement processing may be performed on the obtained raw image by the image enhancement method in this embodiment of this application, and the enhanced output image may be stored in an album of the intelligent terminal.

For example, this application provides an image enhancement method. The method is applied to an electronic device having a display and a camera. The method includes: detecting a second operation of instructing by the user to the camera; in response to the second operation, displaying an output image on the display, or storing the output image in the electronic device, where the output image is a second high dynamic range HDR image obtained after image enhancement processing is performed on a to-be-processed image, and a neural network model is applied to image enhancement processing; inputting a first high dynamic range HDR image corresponding to a to-be-processed image into the neural network model for performing super-resolution processing; and performing, by using the neural network model, image enhancement processing on the super-resolution processed first HDR image and the color image feature, to obtain a second HDR image corresponding to the to-be-processed image, where the to-be-processed image is an image of a first resolution, the first HDR image is an image of a second resolution, and the first resolution is higher than the second resolution. The second HDR image is an HDR image whose resolution is the first resolution. The color image feature indicates different luminance regions or different color change regions in the to-be-processed image.

Optionally, the method may further include: detecting a first operation of starting the camera by the user; and displaying a photographing screen on the display in response to the first operation, where the photographing screen includes a viewfinder frame, and the to-be-processed image is in the viewfinder frame.

It should be noted that the image enhancement method provided in this embodiment of this application is also applicable to extension, limitation, explanation, and description of content related to the image enhancement method in the following related embodiments in FIG. 6 to FIG. 17. Details are not described herein again.

Application scenario 3: autonomous driving field

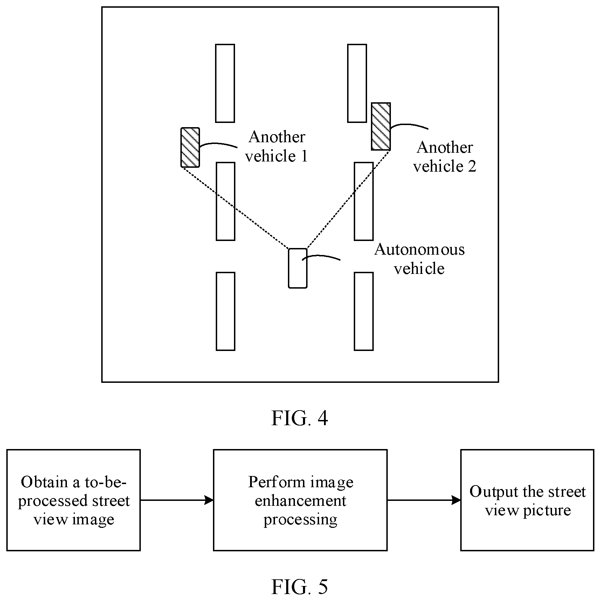

In an embodiment, as shown in FIG. 4, the image enhancement method in this embodiment of this application may be applied to the autonomous driving field. For example, the image enhancement method may be applied to a navigation system of an autonomous vehicle. The image enhancement method in this application may enable the autonomous vehicle to perform, in a navigation process while moving on a road, image enhancement processing on an obtained original road image (or original road video) with poor image quality, to obtain an enhanced road image (or original road video). This ensures safety of the autonomous vehicle.

For example, this application provides an image enhancement method. The method includes: obtaining a to-be-processed road image and a first high dynamic range HDR image corresponding to the road image, where the road image is an image of a first resolution, the first HDR image is an image of a second resolution, and the first resolution is higher than the second resolution;

inputting the road image into a neural network model to obtain a color image feature of the road image, where the color image feature indicates different luminance regions or different color change regions in the road image; inputting the first HDR image into the neural network model for performing super-resolution processing; processing, by using the neural network model, the super-resolution processed first HDR image and the color image feature, to obtain a second HDR image corresponding to the road image, where the second HDR image is an HDR image whose resolution is the first resolution; and identifying road information in the second HDR image based on the second HDR image.

It should be noted that the image enhancement method provided in this embodiment of this application is also applicable to extension, limitation, explanation, and description of content related to the image enhancement method in the following related embodiments in FIG. 6 to FIG. 17. Details are not described herein again.

Application scenario 4: safe city

In an embodiment, as shown in FIG. 5, the image enhancement method in this embodiment of this application may be applied to the safe city field, such as the security protection field. For example, the image enhancement method in this embodiment of this application may be applied to surveillance image enhancement for a safe city. For example, an image (or a video) captured by a surveillance device in a public place is usually affected by factors such as weather and a distance, and therefore the image is blurry, and image quality is poor. The image enhancement method in this application may perform image enhancement on a captured image, so that important information such as a license plate number and a clear face can be restored for public security personnel, to provide important clue information for case investigation.

For example, this application provides an image enhancement method. The method includes: obtaining a to-be-processed street view image and a first high dynamic range HDR image corresponding to the street view image, where the street view image is an image of a first resolution, the first HDR image is an image of a second resolution, and the first resolution is higher than the second resolution; inputting the street view image into a neural network model to obtain a color image feature of the street view image, where the color image feature indicates different luminance regions or different color change regions in the street view image; inputting the first HDR image into the neural network model for performing super-resolution processing; processing, by using the neural network model, the super-resolution processed first HDR image and the color image feature, to obtain a second HDR image corresponding to the street view image, where the second HDR image is an HDR image whose resolution is the first resolution; and identifying street view information in the second HDR image based on the second HDR image.

It should be noted that the image enhancement method provided in this embodiment of this application is also applicable to extension, limitation, explanation, and description of content related to the image enhancement method in the following related embodiments in FIG. 6 to FIG. 17. Details are not described herein again.

It should be understood that the foregoing application scenarios used as examples do not limit the application scenarios of this application.

Because embodiments of this application relate to massive application of a neural network, for ease of understanding, the following describes terms and concepts related to the neural network that may be used in the embodiments of this application.

(1) Neural network

The neural network may include a neuron. The neuron may be an operation unit that uses $x_s$ and an intercept of 1 as input. Output of the operation unit may be as follows:

$$h_{W,b}\left(x\right) = f\left(W^T x\right) = f(\sum\nolimits_{s=1}^{n} W_s x_s + b);$$

s = 1, 2, ..., or n, n is a natural number greater than 1, $W_s$ indicates a weight of $x_s$, b indicates a bias of the neuron. f indicates activation functions (activation function) of the neuron, where the activation function is used for introducing a non-linear characteristic into the neural network, to convert an input signal in the neuron into an output signal. The output signal of the activation function may be used as an input of a next convolutional layer, and the activation function may be a sigmoid function. The neural network is a network constituted by connecting a plurality of single neurons together. To be specific, an output of a neuron may be an input to another neuron. An input of each neuron may be connected to a local receptive field of a previous layer to extract a feature of the local receptive field. The local receptive field may be a region including several neurons.

(2) Deep neural network

The deep neural network (deep neural network, DNN) is also referred to as a multi-layer neural network, and may be understood as a neural network with a plurality of hidden layers. The DNN is divided based on positions of different layers. Neural networks inside the DNN may be classified into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer.

Although the DNN seems complex, the DNN is actually not complex in terms of work at each layer, and is simply represented as the following linear relationship expression: $\vec{y} = \alpha(W \cdot \vec{x} + \vec{b})$, where $\vec{x}$ is an input vector, $\vec{y}$ is an output vector, $\vec{b}$ is an offset vector, $W$ is a weight matrix (also referred to as a coefficient), and $\alpha$ ( ) is an activation function. Each layer simply performs such a simple operation on the input vector $\vec{x}$ x to obtain the output vector $\vec{y}$. Due to a large quantity of DNN layers, quantities of coefficients $W$ and bias vectors $\vec{b}$ are also large. Definitions of these parameters in the DNN are as follows: The coefficient W is used as an example. It is assumed that in a three-layer DNN, a linear coefficient from the fourth neuron at the second layer to the second neuron at the third layer is defined as $W_{24}^3$ w243 . A superscript 3 represents a number of a layer at which the coefficient W is located, and a subscript corresponds to an index 2 of the third layer for output and an index 4 of the second layer for input.

In conclusion, a coefficient from a $k^{th}$ neuron in an $(L-1)^{th}$ layer to a $j^{th}$ neuron in an $L^{th}$ layer is defined as $W_{jk}^L$ WjkL .

It should be noted that there is no W parameter at the input layer. In the deep neural network, more hidden layers make the network more capable of describing a complex case in the real world. Theoretically, a model with more parameters has higher complexity and a larger "capacity". It means that the model can complete a more complex learning task. A process of training the deep neural network is a process of learning a weight matrix, and a final objective of training is to obtain weight matrices (weight matrices formed by vectors W at many layers) of all layers of a trained deep neural network.

(3) Convolutional neural network

The convolutional neural network (convolutional neural network, CNN) is a deep neural network with a convolutional structure. The convolutional neural network includes a feature extractor including a convolutional layer and a sub-sampling layer, and the feature extractor may be considered as a filter. The convolutional layer is a neuron layer that is in the convolutional neural network and at which convolution processing is performed on an input signal. At the convolutional layer of the convolutional neural network, one neuron may be connected to only a part of neurons at a neighboring layer. A convolutional layer usually includes several feature planes, and each feature plane may include some neurons arranged in a rectangle. Neurons of a same feature plane share a weight, and the shared weight herein is a convolution kernel. Weight sharing may be understood as that an image information extraction manner is irrelevant to a location. The convolution kernel may be initialized in a form of a matrix of a random size. In a training process of the convolutional neural network, an appropriate weight may be obtained for the convolution kernel through learning. In addition, a direct benefit brought by weight sharing is that connections between layers of the convolutional neural network are reduced and an overfitting risk is lowered.

(4) Loss function

In a process of training a deep neural network, because it is expected that an output of the deep neural network is as close as possible to a value that is actually expected to be predicted, a predicted value of a current network and a target value that is actually expected may be compared, and then, a weight vector of each layer of the neural network is updated based on a difference between the two (certainly, there is usually an initialization process before the first update, to be specific, a parameter is preconfigured for each layer in the deep neural network). For example, if the predicted value of the network is higher, the weight vector is adjusted to obtain a lower predicted value. The weight vector is continuously adjusted until the deep neural network can predict the target value that is actually expected or a value that is very close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

(5) Back propagation algorithm

In a training process, a neural network may correct values of parameters in an initial neural network model by using an error back propagation (back propagation, BP) algorithm, so that a reconstruction error loss of the neural network model becomes increasingly smaller. Specifically, an input signal is transferred forward until an error loss occurs at an output, and the parameter in the initial neural network model is updated based on back propagation error loss information, to make the error loss converge. The back propagation algorithm is a back propagation motion mainly dependent on the error loss, and is used for obtaining parameters of an optimal neural network model, for example, a weight matrix.

FIG. 6 is a schematic diagram of a system architecture 200 according to an embodiment of this application.

As shown in FIG. 6, a data collection device 260 is configured to collect training data. For the image enhancement method in this embodiment of this application, an image enhancement model (also referred to as an image enhancement network) may be further trained by using training data, in other words, the training data collected by the data collection device 260 may be a training image.

For example, in this embodiment of this application, the training data for training the image enhancement model may include a raw image and a sample enhanced image.

For example, the raw image may be an image with poor image quality, and the sample enhanced image may be an image with high image quality, for example, the sample enhanced image may be an image whose one or more of brightness, color, detail, and the like are improved relative to the sample image.

It should be noted that, the image enhancement may also be referred to as image quality enhancement, and may be specifically processing brightness, color, contrast, saturation, a dynamic range, and/or the like of an image, so that indicators of the image can meet a preset condition or a preset indicator. In this embodiment of this application, image enhancement and image quality enhancement have a same meaning.

After collecting the training data, the data collection device 260 stores the training data in a database 230. A training device 220 obtains a target model/rule 201 (that is, a target processing model in this embodiment of this application) by performing training based on the training data maintained in the database 230. The training device 220 inputs training data into the image enhancement model, until a difference between a predicted enhanced image output by the trained image enhancement model and the sample enhanced image meets a preset condition (for example, the difference between the predicted enhanced image and the sample enhanced image is less than a specific threshold, or the difference between the predicted enhanced image and the sample enhanced image remains unchanged or no longer decreases), to complete training of the target model/rule 201.

For example, in this embodiment of this application, the image enhancement model used to perform the image enhancement method may implement end-to-end training. For example, the image enhancement model may implement end-to-end training by using an input image and a sample enhancement image (for example, a truth image) corresponding to the input image.

In this embodiment provided in this application, the target model/rule 201 is obtained by training the image enhancement model. It should be noted that, during actual application, the training data maintained in the database 230 is not necessarily all captured by the data collection device 260, and may be received from another device.

It should be further noted that the training device 220 may not necessarily train the target model/rule 201 completely based on the training data maintained in the database 230, or may obtain training data from a cloud or another place to perform model training. The foregoing description should not be construed as a limitation on the embodiments of this application. It should be further noted that at least a part of the training data maintained in the database 230 may also be used to perform a process of processing to-be-processed data by an execution device 210.

The target model/rule 201 obtained based on the training performed by the training device 220 may be applied to different systems or devices, for example, applied to the execution device 210 shown in FIG. 6. The execution device 210 may be a terminal, such as a mobile phone terminal, a tablet computer, a notebook computer, an AR/VR, or an in-vehicle terminal; or may be a server, a cloud, or the like.

In FIG. 6, the execution device 210 configures an input/output (input/output, I/O) interface 212, configured to exchange data with an external device. A user may input data to the I/O interface 212 by using a client device 240, where the input data in this embodiment of this application may include a to-be-processed image input by the client device.

A preprocessing module 213 and a preprocessing module 214 are configured to pre-process, based on the input data (for example, the to-be-processed image) received by the I/O interface 212. In this embodiment of this application, there may be no preprocessing module 213 and the preprocessing module 214 (or there may be only one of the preprocessing module 113 and the preprocessing module 114). A calculation module 211 is directly configured to process the input data.

In a process in which the execution device 210 performs preprocessing on the input data or the calculation module 211 of the execution device 210 performs related processing such as calculation, the execution device 210 may invoke data, code, and the like in a data storage system 250 for corresponding processing, and may also store data, instructions, and the like obtained through corresponding processing into the data storage system 250.

Finally, the I/O interface 212 returns a processing result such as the enhanced image of the to-be-processed image, that is, an output image to be obtained to the client device 240, to provide the processing result for the user.

It should be noted that the training device 220 may generate a corresponding target model/rule 201 for different objects or different tasks based on different training data. The corresponding target model/rule 201 may be used to implement the foregoing targets or complete the foregoing tasks, to provide a required result for the user.

As shown in FIG. 6, in one case, the user may manually provide the input data. The user may manually perform operations on a user interface provided by the I/O interface 212.

In another case, the client device 240 may automatically send the input data to the I/O interface 212. If it is required that the client device 240 needs to obtain authorization from the user to automatically send the input data, the user may set corresponding permission on the client device 240. The user may view, on the client device 240, a result output by the execution device 210, and a specific presentation form may be a specific manner, for example, display, a sound, or an action. The client device 240 may also serve as a data collection end to collect, as new sample data, the input data that is input into the I/O interface 212 and the output result that is output from the I/O interface 212 that are shown in the figure, and store the new sample data into the database 230. Certainly, the client device 240 may alternatively not perform collection, but the I/O interface 212 directly stores, as new sample data into the database 230, the input data that is input into the I/O interface 212 and the output result that is output from the I/O interface 212 that are shown in the figure.

It should be noted that FIG. 6 is merely a schematic diagram of a system architecture according to an embodiment of this application. A location relationship between devices, components, modules, and the like shown in the figure does not constitute any limitation. For example, in FIG. 6, the data storage system 250 is an external storage device relative to the execution device 210, and in another case, the data storage system 250 may alternatively be disposed in the execution device 210.

As shown in FIG. 6, the target model/rule 201 is obtained through training by the training device 220. The target model/rule 201 may be the image enhancement model in this embodiment of this application. Specifically, the image enhancement model provided in this embodiment of this application may be a deep neural network, a convolutional neural network, a deep convolutional neural network, or the like.

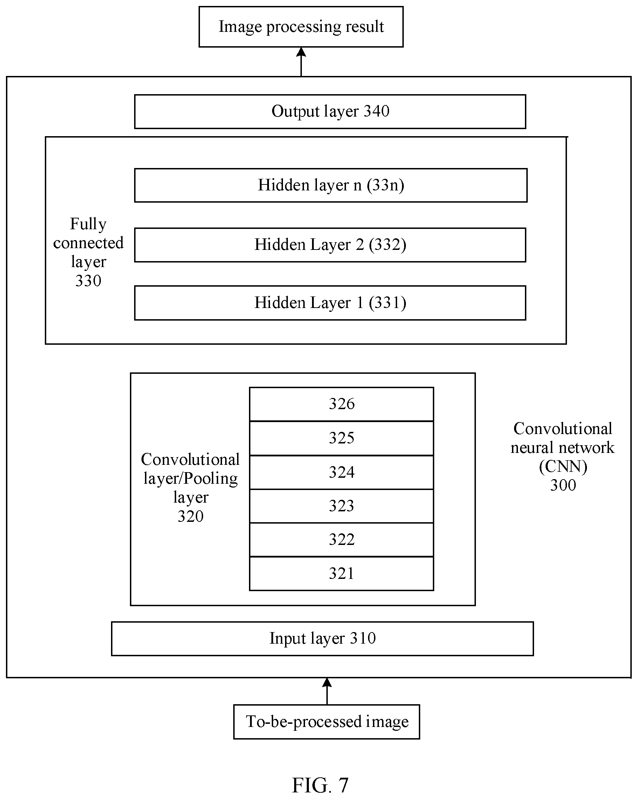

The following mainly describes a structure of the convolutional neural network in detail with reference to FIG. 7. As described in the foregoing description of basic concepts, the convolutional neural network is a deep neural network with a convolutional structure, and is a deep learning (deep learning) architecture. The deep learning architecture is to perform multi-level learning at different abstract levels by using a machine learning algorithm. As a deep learning architecture, the convolutional neural network is a feed-forward (feed-forward) artificial neural network, and each neuron in the feed-forward artificial neural network can respond to an image input into the feed-forward artificial neural network.

A structure of the image enhancement mode in this embodiment of this application may be shown in FIG. 7. In FIG. 7, a convolutional neural network 300 may include an input layer 310, a convolutional layer/pooling layer 320 (the pooling layer is optional), a fully connected layer 330, and an output layer 340. The input layer 310 may obtain a to-be-processed image, and send the obtained to-be-processed image to the convolutional layer/pooling layer 320 and the fully connected layer 330 for processing, to obtain a processing result of the image. The following describes in detail a structure of the layer in the CNN 300 in FIG. 7.

Convolutional layer/Pooling layer 320:

As shown in FIG. 7, the convolutional layer/pooling layer 320 may include, for example, layers 321 to 326. In an implementation, the layer 321 is a convolutional layer, the layer 322 is a pooling layer, the layer 323 is a convolutional layer, the layer 324 is a pooling layer, the layer 325 is a convolutional layer, and the layer 326 is a pooling layer. In another implementation, the layers 321 and 322 are convolutional layers, the layer 323 is a pooling layer, the layers 324 and 325 are convolutional layers, and the layer 326 is a pooling layer. To be specific an output of the convolutional layer may be used as an input of a subsequent pooling layer, or may also be used as an input of another convolutional layer, to continue the convolution operation.

The following uses the convolutional layer 321 as an example to describe an internal working principle of one convolutional layer.

The convolutional layer 321 may include a plurality of convolution operators. The convolution operator is also referred to as a kernel. In image processing, the convolution operator functions as a filter that extracts specific information from an input image matrix. The convolution operator may essentially be a weight matrix, and the weight matrix is usually predefined. In a process of performing a convolution operation on an image, the weight matrix usually processes pixels at a granularity level of one pixel (or two pixels, depending on a value of a stride (stride)) in a horizontal direction on an input image, to extract a specific feature from the image. A size of the weight matrix should be related to a size of the picture. It should be noted that a depth dimension (depth dimension) of the weight matrix is the same as a depth dimension of the input image. During a convolution operation, the weight matrix extends to an entire depth of the input image. Therefore, a convolutional output of a single depth dimension is generated through convolution with a single weight matrix. However, in most cases, a single weight matrix is not used, but a plurality of weight matrices with a same size (rows x columns), namely, a plurality of same-type matrices, are applied. Outputs of the weight matrices are stacked to form a depth dimension of a convolutional picture. The dimension herein may be understood as being determined based on the foregoing "plurality".

Different weight matrices may be used to extract different features from the image. For example, one weight matrix is used to extract edge information of the image, another weight matrix is used to extract a specific color of the image, and a further weight matrix is used to blur unneeded noise in the image. The plurality of weight matrices have the same size (rows x columns), and convolutional feature maps extracted from the plurality of weight matrices with the same size have a same size. Then, the plurality of extracted convolutional feature maps with the same size are combined to form an output of the convolution operation.

Weight values in these weight matrices need to be obtained through a lot of training during actual application. Each weight matrix formed by using the weight values obtained through training may be used for extracting information from an input image, to enable the convolutional neural network 300 to perform correct prediction.

When the convolutional neural network 300 has a plurality of convolutional layers, a relatively large quantity of general features are usually extracted at an initial convolutional layer (for example, 321). The general feature may also be referred to as a low-level feature. As the depth of the convolutional neural network 300 increases, a feature extracted at a subsequent convolutional layer (for example, 326) becomes more complex, for example, a high-level semantic feature. A feature with higher semantics is more applicable to a to-be-resolved problem.

Pooling layer:

Because a quantity of training parameters usually needs to be reduced, a pooling layer usually needs to be periodically introduced after a convolutional layer. To be specific, for the layers 321 to 326 in the layer 320 shown in FIG. 7, one convolutional layer may be followed by one pooling layer, or a plurality of convolutional layers may be followed by one or more pooling layers. During image processing, the pooling layer is used for reducing a space size of the image. The pooling layer may include an average pooling operator and/or a maximum pooling operator, to perform sampling on the input image to obtain an image with a relatively small size. The average pooling operator may be used to calculate pixel values in the image in a specific range, to generate an average value. The average value is used as an average pooling result. The maximum pooling operator may be used to select a pixel with a maximum value in a specific range as a maximum pooling result.

In addition, similar to that the size of the weight matrix at the convolutional layer needs to be related to the size of the picture, an operator at the pooling layer also needs to be related to the size of the picture. A size of a processed picture output from the pooling layer may be less than a size of a picture input to the pooling layer. Each pixel in the picture output from the pooling layer represents an average value or a maximum value of a corresponding sub-region of the picture input to the pooling layer.

Fully connected layer 330:

After processing performed at the convolutional layer/pooling layer 320, the convolutional neural network 300 is not ready to output required output information. As described above, at the convolutional layer/pooling layer 320, only a feature is extracted, and parameters resulting from an input image are reduced. However, to generate final output information (required category information or other related information), the convolutional neural network 300 needs to use the fully connected layer 330 to generate a quantity of outputs of one or a set of required categories. Therefore, the fully connected layer 330 may include a plurality of hidden layers (331 and 332 to 33n shown in FIG. 7) and an output layer 340. Parameters included in the plurality of hidden layers may be obtained through pre-training based on related training data of a specific task type. For example, the task type may include image recognition, image classification, or super-resolution image reconstruction.

At the fully connected layer 330, the plurality of hidden layers are followed by the output layer 340, namely, a last layer of the entire convolutional neural network 300. The output layer 340 has a loss function similar to a categorical cross entropy, and the loss function is specifically used to calculate a prediction error. Once forward propagation (for example, propagation in a direction from 310 to 340 in FIG. 7) of the entire convolutional neural network 300 is completed, back propagation (for example, propagation in a direction from 340 to 310 in FIG. 7) is started to update a weight value and a deviation of each layer mentioned above, to reduce a loss of the convolutional neural network 300 and an error between a result output by the convolutional neural network 300 by using the output layer and an ideal result.

It should be noted that the convolutional neural network shown in FIG. 7 is merely an example structure of the image enhancement model in this embodiment of this application. In a specific application, the convolutional neural network used in the image enhancement method in this embodiment of this application may alternatively exist in a form of another network model.

In this embodiment of this application, the image enhancement apparatus may include the convolutional neural network 300 shown in FIG. 7. The image enhancement apparatus may perform image enhancement processing on the to-be-processed image, to obtain a processed output image.

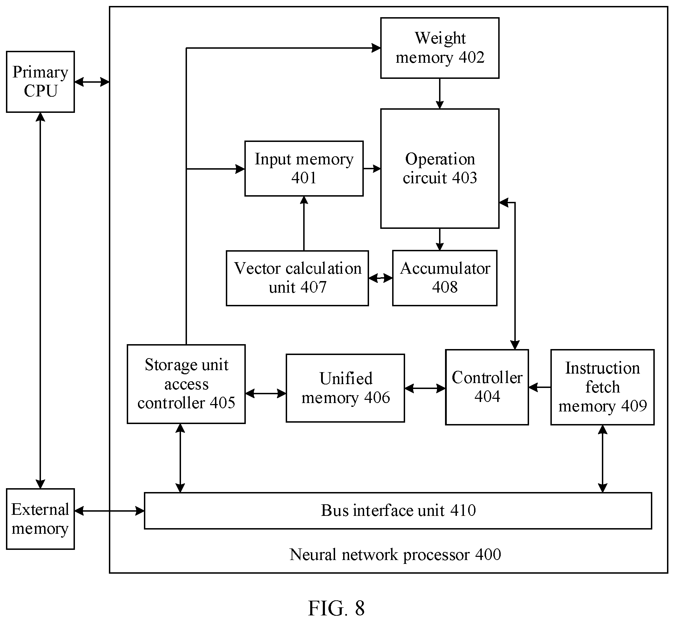

FIG. 8 is a schematic diagram of a hardware structure of a chip according to an embodiment of this application. The chip includes a neural-network processing unit (neural-network processing unit, NPU) 400. The chip may be disposed in the execution device 210 shown in FIG. 6, to complete calculation carried out by the calculation module 211. Alternatively, the chip may be disposed in the training device 220 shown in FIG. 6, to complete training carried out by the training device 220 and output the target model/rule 201. All algorithms of the layers in the convolutional neural network shown in FIG. 7 may be implemented by the chip shown in FIG. 8.

The NPU 400 is mounted to a host central processing unit (central processing unit, CPU) as a coprocessor, and the host CPU assigns a task. A core part of the NPU 400 is an operation circuit 403, and a controller 404 controls the operation circuit 403 to extract data in a memory (a weight memory or an input memory) and perform an operation.

In some implementations, the operation circuit 403 includes a plurality of processing units (process engine, PE). In some implementations, the operation circuit 403 is a two-dimensional systolic array. The operation circuit 403 may alternatively be a one-dimensional systolic array or another electronic circuit capable of performing mathematical operations such as multiplication and addition. In some implementations, the operation circuit 403 is a general-purpose matrix processor.

For example, it is assumed that there is an input matrix A, a weight matrix B, and an output matrix C. The operation circuit 403 obtains data corresponding to the weight matrix B from a weight memory 402, and buffers the data on each PE in the operation circuit 403. The operation circuit 403 fetches data of the matrix A from an input memory 401, to perform a matrix operation with the matrix B to obtain a partial result or a final result of a matrix, and stores the result into an accumulator (accumulator) 408.

A vector computation unit 407 may perform further processing such as vector multiplication, vector addition, an exponent operation, a logarithm operation, or value comparison on an output of the operation circuit 403. For example, the vector computation unit 407 may be configured to perform network calculation, such as pooling (pooling), batch normalization (batch normalization), or local response normalization (local response normalization) at a non-convolutional/non-FC layer in a neural network.

In some implementations, the vector computation unit 407 can store, in a unified memory 406, an output vector that has been processed. For example, the vector computation unit 407 may apply a non-linear function to the output of the operation circuit 403, for example, a vector of an accumulated value, to generate an activation value. In some implementations, the vector computation unit 407 generates a normalized value, a combined value, or both.

In some implementations, the processed and output vector can be used as an activation input to the operation circuit 403, for example, for use in subsequent layers in the neural network.

The unified memory 406 is configured to store input data and output data. For weight data, a storage unit access controller (direct memory access controller, DMAC) 405 transfers input data in an external memory to the input memory 401 and/or the unified memory 406, stores weight data in the external memory into the weight memory 402, and stores data in the unified memory 406 into the external memory.

A bus interface unit (bus interface unit, BIU) 410 is configured to implement interaction between the host CPU, the DMAC, and instructions fetch buffer 409 through a bus.

The instruction fetch buffer (instruction fetch buffer) 409 connected to the controller 404 is configured to store instructions to be used by the controller 404. The controller 404 is configured to invoke the instructions buffered in the instruction fetch buffer 409, to control a working process of an operation accelerator.

Generally, the unified memory 406, the input memory 401, the weight memory 402, and the instruction fetch buffer 409 each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Operations at various layers in the convolutional neural network shown in FIG. 7 may be performed by the operation circuit 403 or the vector computation unit 407.

The execution device 210 in FIG. 6 described above can perform steps of the image enhancement method in this embodiment of this application. The CNN model shown in FIG. 7 and the chip shown in FIG. 8 may also be configured to perform steps of the image enhancement method in this embodiment of this application.

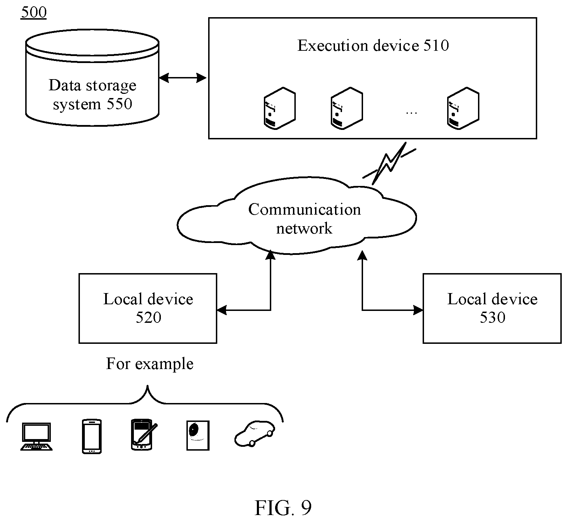

FIG. 9 is a schematic diagram of a system architecture 500 according to an embodiment of this application. The system architecture may include a local device 520, a local device 530, an execution device 510, and a data storage system 550. The local device 520 and the local device 530 are connected to the execution device 510 through a communication network.

For example, the execution device 510 may be implemented by one or more servers.

Optionally, the execution device 510 may cooperate with another computing device, for example, a device such as a data memory, a router, or a load balancer. The execution device 510 may be disposed on one physical site, or distributed on a plurality of physical sites. The execution device 510 may implement the image enhancement method in embodiments of this application by using data in the data storage system 550 or by invoking program code in the data storage system 550.

It should be noted that the execution device 510 may also be referred to as a cloud device. In this case, the execution device 510 may be deployed on the cloud.

Specifically, the execution device 510 may perform the following process: obtaining a to-be-processed image and a first high dynamic range HDR image corresponding to the to-be-processed image, where the to-be-processed image is an image of a first resolution, the first HDR image is an image of a second resolution, and the first resolution is higher than the second resolution; inputting the to-be-processed image into a neural network model to obtain a color image feature of the to-be-processed image, where the color image feature indicates different luminance regions or different color change regions in the to-be-processed image; inputting the first HDR image into the neural network model for performing super-resolution processing; and processing, by using the neural network model, the super-resolution processed first HDR image and the color image feature, to obtain a second HDR image corresponding to the to-be-processed image, where the second HDR image is an HDR image whose resolution is the first resolution.

In a possible implementation, the image enhancement method in this embodiment of this application may be an offline method performed on a cloud, for example, the image enhancement method in this embodiment of this application may be performed by the execution device 510.

In a possible implementation, the image enhancement method provided in this embodiment of this application may be performed by the local device 520 or the local device 530.

In this embodiment of this application, the image enhancement may be performed on an obtained to-be-processed image with poor image quality, to obtain an output image of the to-be-processed image whose performance such as image details, image colors, image brightness, and the like are improved, that is, the second HDR image.

For example, users may operate respective user equipment (for example, the local device 520 and the local device 530) to interact with the execution device 510. Each local device may be any computing device, such as a personal computer, a computer workstation, a smartphone, a tablet computer, an intelligent camera, an intelligent vehicle, another type of cellular phone, a media consumption device, a wearable device, a set-top box, or a game console.

The local device of each user may interact with the execution device 510 through a communication network compliant with any communication mechanism/communication standard. The communication network may be a wide area network, a local area network, a point-to-point connection, or any combination thereof.

In an implementation, the local device 520 and the local device 530 obtain a related parameter of the neural network model from the execution device 510, deploy the neural network model on the local device 520 and the local device 530, and perform the image enhancement processing by using the neural network model.

In another implementation, the neural network model may be directly deployed on the execution device 510. The execution device 510 obtains a to-be-processed image and a first HDR image corresponding to the to-be-processed image from the local device 520 and the local device 530, and performs the image enhancement processing based on neural network model, to obtain a second HDR image corresponding to the to-be-processed image.

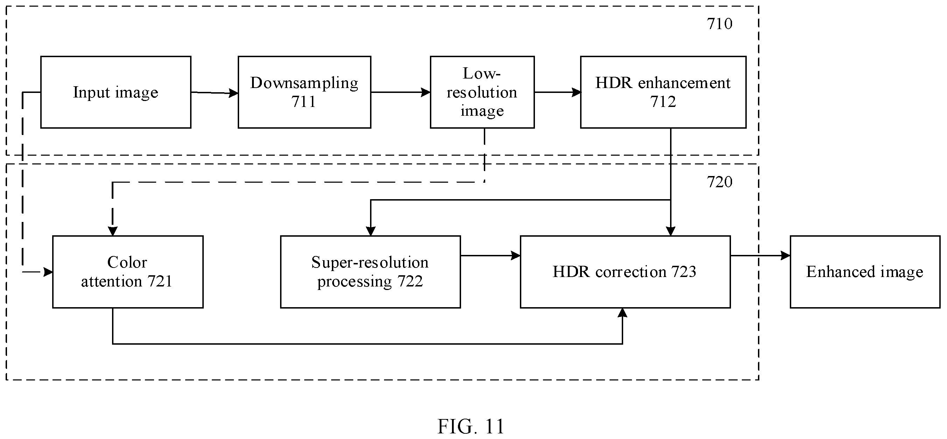

For example, the neural network model may be a super-resolution network in embodiments of this application, for example, super-resolution networks 720 in FIG. 11, FIG. 13, and FIG. 15.

Currently, to perform high-resolution image enhancement in real time, a method of "downsampling + HDR + super-resolution" is proposed to decrease computing overheads, to enhance image quality in real time. An original-resolution image and a low-resolution enhanced image may be input into a pre-trained convolutional neural network, to perform super-resolution processing (that is, restore an original resolution of the image) on the image, to obtain an output original-resolution enhanced image. High-resolution image enhancement may be performed in the foregoing manner. On one hand, to decrease computing overheads, according to a deep learning-based super-resolution method, a complex super-resolution process is usually performed only on a luminance channel of an image, and simple upsampling may be performed on a color channel of the image. This does not ensure consistency between the original-resolution enhanced image and the low-resolution enhanced image in terms of color, brightness, contrast, saturation, a dynamic range, and the like. On the other hand, a process of performing the super-resolution processing based on the original-resolution image and the low-resolution enhanced image by the image enhancement method is not described in detail. If simple super-resolution processing is performed, problems may occur, for example, an image is blurry and texture details are lost. If an excessively complex super-resolution processing is performed, processing time of the entire convolutional neural network may be increased, and problems such as a checkerboard image and artifacts (Artifact) may be generated.

In view of this, embodiments of this application provide an image enhancement method and apparatus. The to-be-processed image and the first HDR image of the to-be-processed image are obtained, where the first HDR image is a low-resolution enhanced image corresponding to the to-be-processed image, and then super-resolution processing is performed on the first HDR image by using the neural network model based on the color image feature of the to-be-processed image, to obtain the enhanced image whose resolution is the same as that of the to-be-processed image, that is, the second HDR image. In embodiments of this application, a color attention mechanism, that is, the color image feature, is introduced based on "downsampling + HDR + super-resolution". In an image enhancement process, this improves restoration effect of the neural network model on the difficult region (an overbright region or an overdark region) in the to-be-processed image in terms of the color, brightness, contrast, saturation, and the like, and improves image enhancement effect.

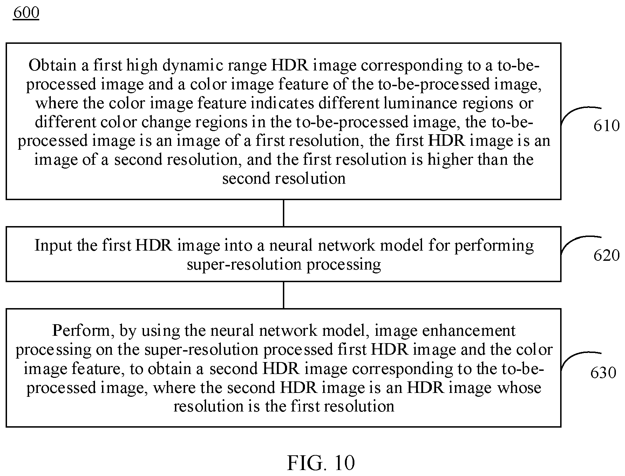

FIG. 10 is a schematic flowchart of an image enhancement method according to an embodiment of this application. The image enhancement method shown in FIG. 10 may be performed by an image enhancement apparatus. The image enhancement apparatus may be specifically the execution device 210 in FIG. 6, or may be the execution device 510 or the local device in FIG. 9. The method shown in FIG. 10 includes steps 610 to 630. The following separately describes the steps 610 to 630 in detail.

Step 610: Obtain a first high dynamic range HDR image corresponding to a to-be-processed image and a color image feature of the to-be-processed image

The color image feature indicates different luminance regions or different color change regions in the to-be-processed image, the to-be-processed image is an image of a first resolution, the first HDR image is an image of a second resolution, and the first resolution is higher than the second resolution.

For example, the to-be-processed image may be a to-be-processed image needing to be enhanced. For example, the to-be-processed image may be a raw image whose resolution is high and image quality is poor. For example, the to-be-processed image may be an image has a poor image quality due to factors such as weather, a distance, and a photographing environment. The poor image quality includes but is not limited to: The image is blurry, or color, brightness, contrast, saturation, and the like of the image are poor.

The to-be-processed image may be an image/video shot by an electronic device through a camera. Alternatively, the to-be-processed image may be an image obtained from inside the electronic device (for example, an image stored in an album of the electronic device, or a picture obtained by the electronic device from a cloud). For example, the electronic device may be any one of the local device or the execution device shown in FIG. 9.

For example, the first HDR image may be an image obtained by performing downsampling and HDR enhancement on the to-be-processed image. Compared with a standard dynamic range (standard dynamic range, SDR) image, a high dynamic range (high dynamic range, HDR) image can provide more dynamic ranges and image colors, that is, the HDR image may include more image details.

In this embodiment of this application, the color image feature of the to-be-processed image may be obtained by a target learning method or a conventional method.

For example, the to-be-processed image may be processed by the target learning method or the conventional method to obtain the color image feature of the to-be-processed image.

A core of the target learning method provides a learning objective to measure a difference between an input image and a truth image (a learning objective). Such difference is usually reflected in a bright region and a shadow region (a dark region) of the image.

In addition, the color image feature of the to-be-processed image may be obtained by using the conventional method. In this case, the truth image may no longer be required, and no learning process is required. For example, a color input image may be converted into a grayscale image or converted into another color domain (for example, a YUV domain or a LAB domain) having a luminance channel, and then a minimum threshold and a maximum threshold may be set. A part of a channel (for example, a grayscale channel, a Y channel in the YUV domain, or an L channel in the LAB domain), which is lower than or higher than the minimum threshold and the maximum threshold, is used as a region with a larger weight, and another region is used as a region with a smaller weight.

In an example, the color image feature of the to-be-processed image may be obtained by using the to-be-processed image and an auto encoder-decoder subnework.

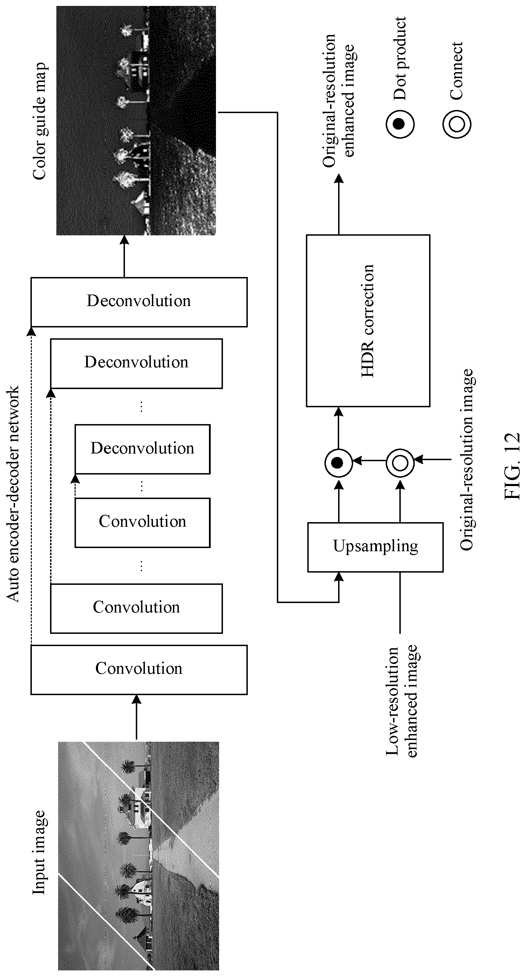

In an example, due to limitations of factors such as a running speed, a running video memory, and power consumption of a terminal device, to decrease a calculation amount, downsampling may be first performed on the to-be-processed image to obtain the low-resolution image, and then the color image feature is obtained by using the low-resolution image corresponding to the to-be-processed image and the auto encoder-decoder subnetwork. For example, refer to an example in which the color image feature of the to-be-processed image is obtained by using the low-resolution image of the to-be-processed image in FIG. 12.

It should be noted that the color image feature may also be referred to as a color guide map. The color image feature has more detailed guide information about a difficult region (for example, a bright region or a dark region) in the to-be-processed image that is input into a neural network model, so that the neural network model may pay more attention to enhancement effect of the difficult region during learning.

Step 620: Input the first HDR image into the neural network model for performing super-resolution processing.

The super-resolution processing may be a convolution operation and an upsampling operation, to enable a resolution of the first HDR image to be the same as a resolution of the to-be-processed image.

Further, to enable the neural network model to pay more attention to an edge region and a texture feature when performing the super-resolution processing on the first HDR image, a texture attention mechanism may be introduced when the super-resolution processing is performed on the first HDR image.

Optionally, in a possible implementation, the to-be-processed image may be input into the neural network model to obtain a texture image feature of the to-be-processed image. The texture image feature may indicate the edge region and the texture region of the to-be-processed image. Inputting the first HDR image into the neural network model for super-resolution processing means performing, by using the neural network model, the super-resolution processing on the first HDR image based on the texture image feature.

It should be noted that a texture attention mechanism is introduced into the neural network model to allow the neural network model to learn details such as edges and textures in an image. The texture image feature is also be referred to as a texture guide map and can improve learning by the neural network model of a region with a high weight in the texture guide map. Therefore, performing the super-resolution processing on the first HDR image can improve a capability of restoring image texture details by a super-resolution algorithm, and this avoids image blur or another sensory difference introduced after the super-resolution processing is performed.

Further, a multi-scale image feature of the to-be-processed image may be further introduced in the process of performing the super-resolution processing on the first HDR image. The multi-scale image feature may be image features of different resolutions. More image detail information may be introduced into the neural network model by introducing the multi-scale image feature, to restore details of the first HDR image.

In this embodiment of this application, in the process of performing the super-resolution processing on the first HDR image, super-resolution and restoration processing may be performed according to a dual attention mechanism. The dual attention mechanism may include a texture attention mechanism and a color attention mechanism. When the texture attention mechanism and the color attention mechanism are used in the super-resolution processing process, color, brightness, saturation, contrast, texture details, and the like of a finally obtained enhanced image, that is, the second HDR image of the to-be-processed image, are the same as those of a truth image, so that the image enhancement effect is improved.

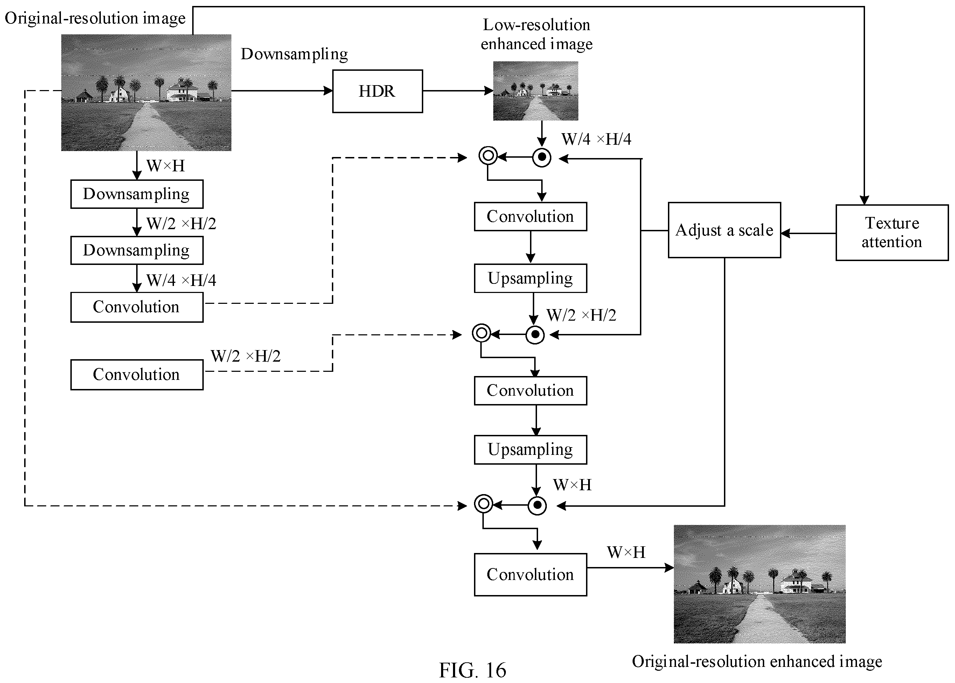

Optionally, in a possible implementation, the to-be-processed image may be input into the neural network model to obtain a multi-scale image feature of the to-be-processed image. A scale of any one image feature in the multi-scale image feature is different. The super-resolution processing may be performed, by using the neural network model, on the first HDR image based on the texture image feature and the multi-scale image feature. The multi-scale image feature may indicate image information of the to-be-processed image at different scales. For example, refer to a schematic flowchart of self-guided multi-level super-resolution processing according to an embodiment of this application in FIG. 16.

It should be understood that the multi-scale image feature may indicate image information of the to-be-processed image at different scales. The different scales may refer to different resolutions, and the image information may refer to high-frequency information in the image. For example, the high-frequency information may include one or more of edge information, detail information, and texture information in the image.

For example, the performing, by using the neural network model, the super-resolution processing on the first HDR image based on the texture image feature and the multi-scale image feature include: adjusting, by using the neural network model, the scale of the texture image feature, to obtain a texture image feature at a first scale, where a scale of the texture image feature at the first scale is the same as that of a first-scale image feature in a multi-scale image; performing, by using the neural network model, a dot product on the first HDR image and the texture image feature at the first scale, to obtain a third image feature; and performing, by using the neural network model, a channel combination operation, a convolution operation, and an upsampling operation on the third image feature and the first-scale image feature.

This embodiment of this application provides a multi-level super-resolution processing method, that is, a method of extracting, by reducing feature dimensions from an original-resolution input image, the multi-scale feature information. During the super-resolution processing, multi-scale super-resolution and restoration may be performed based on the multi-scale feature of the first HDR image, that is, a low-resolution HDR image, and the to-be-processed image, that is, the raw input image, and then feature information at a corresponding scale of the low-resolution HDR image and the raw input image may be fused, to obtain the second HDR image of the to-be-processed image, that is, an enhanced image obtained after the enhancement processing is performed on the to-be-processed image.

Step 630: Process, by using the neural network model, the super-resolution processed first HDR image and the color image feature, to obtain a second HDR image corresponding to the to-be-processed image.

The second HDR image is an HDR image whose resolution is the first resolution, that is, the resolution of the second HDR image is the same as that of the to-be-processed image. The second HDR image may be an enhanced image obtained after enhancement processing is performed on the to-be-processed image.

For example, the dot product operation and the convolution operation may be performed, by using the neural network model, on the super-resolution processed first HDR image and the color image feature, to obtain the second HDR image.

The dot product may be multiplication performed pixel by pixel.

FIG. 11 is a schematic diagram of a system architecture of an image enhancement method according to an embodiment of this application. As shown in FIG. 11, the system architecture may include an HDR network 710 and a super resolution (super resolution, SR) network 720. The HDR network 710 may include a downsampling unit 711 and an HDR enhancement unit 712. The SR network 720 may include a color attention unit 721, a super-resolution processing unit 722, and an HDR correction unit 723.

For example, the downsampling unit 711 may be configured to perform downsampling processing on an input image, for example, a high-resolution image, to obtain a low-resolution image or a small-resolution image, for example, a 1080P resolution image.

For example, the HDR enhancement unit 712 may be configured to process, by using an HDR increasing method, the downsampling processed low-resolution image, to obtain a low-resolution HDR enhanced image.

The HDR enhancement method may perform image enhancement processing by using any neural network model having an image enhancement function, for example, various neural networks using Unet or a high dynamic range network (high dynamic range net, HDRNet) as a basic framework.

For example, the color attention unit 721 may be configured to extract, by using a calculation method, a color guide map of the input image based on the input image (for example, an original-resolution image), where the color guide map may be a color image feature corresponding to the input image.

In this embodiment of this application, the color image feature of the to-be-processed image may be obtained by a target learning method or a conventional method.

For example, the to-be-processed image may be processed by the target learning method or the conventional method to obtain the color image feature of the to-be-processed image.

A core of the target learning method is to measure a difference between an input image and a truth image (a learning objective) provided such the learning objective is introduced. Such difference is usually reflected in a bright region and a shadow region (a dark region) of the image.

In addition, the color image feature of the to-be-processed image may be obtained by the conventional method. In this case, the truth image may no longer be required, and no learning process is required. For example, a color input image may be converted into a grayscale image or converted into another color domain (for example, a YUV domain or a LAB domain) having a luminance channel, and then a minimum threshold and a maximum threshold may be set. A part of a channel (for example, a grayscale channel, a Y channel in the YUV domain, or an L channel in the LAB domain), which is lower than or higher than the minimum threshold and the maximum threshold, is used as a region with a larger weight, and another region is used as a region with a smaller weight.

It should be noted that the color guide map has more detailed guide information about a difficult region (for example, a bright region or a dark region) in the input image, so that the SR network 720 may pay more attention to enhancement effect of the difficult region during learning.

For example, the HDR correction unit 723 may be configured to: based on the low-resolution enhanced image output by the HDR enhancement unit 712 and an image output by the super-resolution processing unit 722, and with reference to the color guide map obtained by the color attention unit 721, correct, by using the CNN, color, brightness, contrast, saturation, and the like of a super-resolution processed image, to ensure consistency of HDR effect before and after the image is processed by the super-resolution processing unit 722, and enhance enhancement effect on the difficult region of the image.

With reference to FIG. 12, the following specifically describes a procedure of performing an HDR correction based on the color guide map. FIG. 12 is a schematic diagram of an HDR correction based on a color guide map according to an embodiment of this application.

As shown in FIG. 12, the color guide map may be obtained by the following steps: extracting, by using a pre-trained network, for example, a network that uses an auto encoder-decoder network (Encoder-Decoder Network) to extract the color guide map, a color image feature corresponding to an input image, where an input image of the auto encoder-decoder network is a low-resolution input image; and using the auto encoder-decoder network to obtain the color guide map. In a pre-training process, the auto encoder-decoder network may design an objective function to ensure that a difficult region (for example, a bright region or a dark region) in the input image may have a larger weight in the color guide map.

For example, the auto encoder-decoder network may be trained by using the following objective function:

$$A_{map} = \frac{\left| \max_c \left( I_{in} \right) - \max_c \left( I_{t\arg et} \right) \right|}{\max_c \left( I_{in} \right)};$$

$\max_c$ represents calculating a maximum value of a channel dimension of an input image; $A_{map}$ represents a color guide map; and $I_{in}$ represents an input image feature of an auto encoder-decoder network, for example, an original-resolution image feature or a low-resolution image feature; $I_{target}$ represents a truth image whose resolution is the same as that of the input image.

Based on the objective function described above, for a region in which the input image and a target image greatly differ, the auto encoder-decoder network sets a weight of the color guide map in this region to a larger value.

In a training process of the SR network 720, a color guide map extraction network, for example, the auto encoder-decoder network shown in FIG. 12, may no longer participate in training. A darker region in the input image and a region in which image color greatly changes may correspondingly have a larger weight in the color guide map. This guides the back-end HDR correction unit 723 pay more attention to learning these regions.

In an example, as shown in FIG. 12, the input image may be an original-resolution image. Alternatively, to decrease a calculation amount, the input image may be a low-resolution image obtained after downsampling processing is performed on the original-resolution image.

It should be noted that, if the color guide map is obtained by using the original-resolution image, upsampling operation does not need to be performed on the color guide map.

For example, the HDR correction unit 723 may be a pre-trained CNN network. The HDR correction unit 723 may receive three parts of input data, where first input data is a first original-resolution enhanced image that is output by the super-resolution processing unit 722, and the first original-resolution enhanced image may be an image obtained after upsampling processing is performed on a low-resolution enhanced image that is output by the HDR enhancement unit 712; second input data is the low-resolution enhanced image that is output by the HDR enhancement unit 712; and third input data is a color attention guide map that is output by the color attention unit 721. In the HDR correction unit 723, the HDR correction is performed based on the three parts of input data to output a second original-resolution enhanced image.

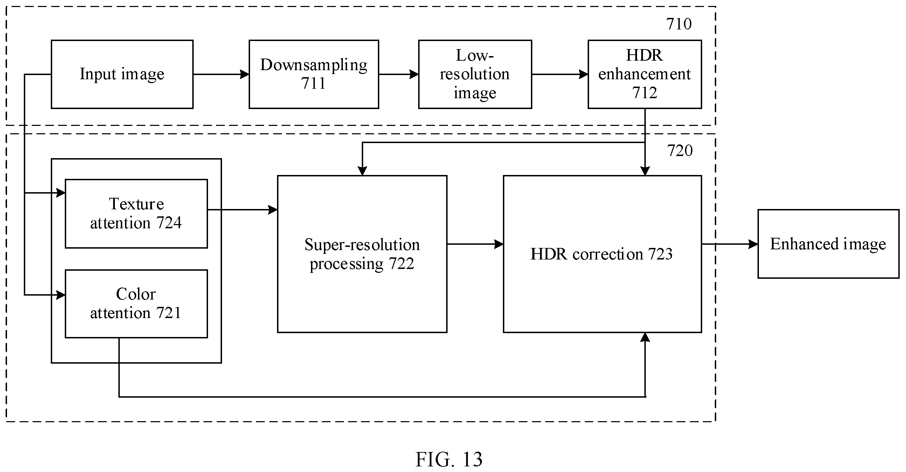

Further, to ensure that the super-resolution processing unit 722 may pay more attention to learning textures and edges in the input image during super-resolution processing, a texture attention unit may be introduced into the system architecture as shown in FIG. 13.

FIG. 13 may further include a texture attention unit 724. The texture attention unit 724 may be configured to extract, by using a calculation method, a texture guide map (that is, high-frequency information of the image) based on an input image, that is, an original-resolution image. When performing an upsampling operation and a convolution operation, the super-resolution processing unit 722 may further enhance, based on the texture guide map output by the texture attention unit 724, restoration of a texture detail and an edge region of the image during super-resolution processing.

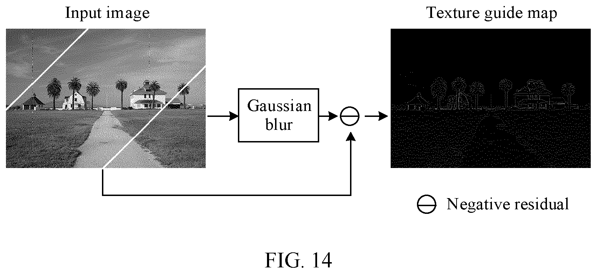

The following describes a process of obtaining the texture guide map with reference to FIG. 14. FIG. 14 is a schematic diagram of an extraction process of texture guide map according to an embodiment of this application.

For example, input data of the texture attention unit may be an input image without color information, for example, a grayscale image or a Y channel of a YUV color domain. For example, if the input data is a Y-channel image feature, high-frequency information in the image may be filtered out through Gaussian filtering, and negative residual is performed between the output data obtained through filtering and the input image to obtain the high-frequency information of the image, that is, the texture guide map. Textures and edges in the image usually exist in high-frequency information of the image as shown in FIG. 14.

It should be noted that a process of obtaining the texture guide map is not limited to such methods, and the texture guide map may also be obtained by using an algorithm such as edge detection. This is not limited in this application.

In this embodiment of this application, the texture attention unit 724 may be configured to extract the high-frequency information from the image as the texture guide map, and the extracted texture guide map acts on the super-resolution processing unit 722. This improves learning of a region with a high weight in the guide map by the SR network 720, and improves learning of details such as image edges and textures by the SR network 720.

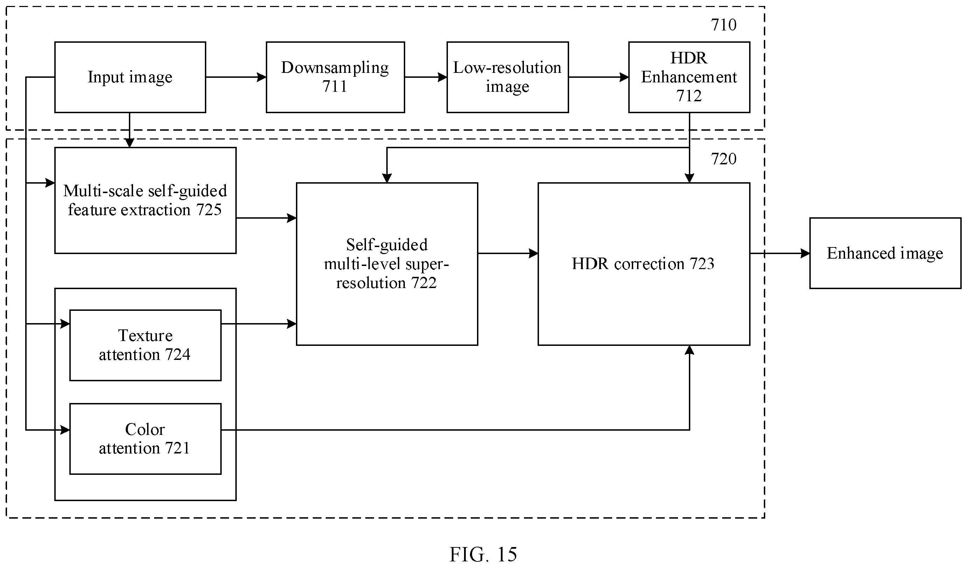

In an example, the super-resolution processing unit may use a self-guided multi-level super-resolution unit. To be specific, in a super-resolution process, a plurality of image scales may be progressively increased to a scale of the original-resolution input image as shown in FIG. 15.

FIG. 15 is a schematic diagram of a system architecture of an image enhancement method according to an embodiment of this application. As shown in FIG. 15, the system architecture may include an HDR network 710 and a super resolution (super resolution, SR) network 720. The HDR network 710 may include a downsampling unit 711 and an HDR enhancement unit 712. The SR network 720 may include a color attention unit 721, a self-guided multi-level super-resolution unit 722, an HDR correction unit 723, a texture attention unit 724, and a multi-scale self-guided feature extraction unit 725.

The HDR network 710 is configured to perform HDR enhancement based on an input original-resolution input image I (for example, 4K resolution), to obtain an HDR-enhanced low-resolution HDR image (for example, 1080P resolution).

For example, the input image may be an original-resolution image, for example, a high-resolution image or a full-resolution image. The input image is processed by the downsampling unit 711 to obtain a low-resolution image or a small-resolution image. The low-resolution image is input and processed in the HDR enhancement unit 712 to obtain an output low-resolution HDR image.

The SR network 720 is configured to perform, by using the color attention unit 721 to the multi-scale self-guided feature extraction unit 725 included in the SR network 720 based on the input low-resolution HDR image and the original-resolution image, super-resolution processing on the input image, to restore an original resolution of the image, and then obtain an output original-resolution enhanced image (for example, 4K resolution).

For example, as shown in FIG. 15, the multi-scale self-guided feature extraction unit 725 in the SR network 720 may be configured to extract, by using a convolutional neural network, a feature based on the input original-resolution image, to obtain a self-guided map at a plurality of scales.

It should be noted that the self-guided map at a plurality of scales may refer to image features at different scales obtained by performing downsampling and convolution processing at different depths on the input image. The downsampling may include but is not limited to a sampling interpolation method or pixel rearrangement (space to depth). The plurality of scales may refer to a plurality of resolution sizes.

For example, the color attention unit 721 may be configured to extract, by using a calculation method, a color guide map of the input image based on the input image (for example, an original-resolution image), where the color guide map may be a color image feature corresponding to the input image.

It should be noted that the color guide map has more detailed guide information about a difficult region (for example, a bright region or a dark region) in the input image, so that the SR network 720 may pay more attention to enhancement effect of the difficult region during learning.

For example, the texture attention unit 724 may be configured to extract, by using a calculation method, a texture guide map (that is, high-frequency information of the image) based on an input image, that is, an original-resolution image. For a specific procedure, refer to FIG. 14. Details are not described herein again.

For example, as shown in FIG. 15, the input data in the self-guided multi-level super-resolution unit 722 may include image features at different scales input by the multi-scale self-guided feature extraction unit 725, a texture image feature corresponding to the input image output by the texture attention unit 724, and the low-resolution HDR enhanced image input by the HDR enhancement unit 712. The self-guided multi-level super-resolution unit 722 may perform the upsampling operation and the convolution operation on the input data to restore the image resolution, and then obtain a super-resolution restored image $H_{SR}$.

It should be noted that the texture attention image feature is introduced in the super-resolution processing process; so that when the super-resolution processing is performed on the image, the restoration of a texture detail and an edge region of the image is enhanced during the super-resolution processing. In addition, when the multi-scale image feature is input, more image details and information may be input during super-resolution processing.

For example, the HDR correction unit 723 may be configured to correct color, brightness, contrast, saturation, and the like of the super-resolution restored image $H_{SR}$, to obtain the original-resolution enhanced image, and enable the original-resolution enhanced image to be infinitely close to the truth image. The input data of the HDR correction unit 723 may be the super-resolution restored image $H_{SR}$, a low-resolution HDR image $H_L$, and a color attention image feature. The convolution operation is performed on the input data, so that the obtained image feature is the same as a truth image feature or a deviation falls within a preset range.

FIG. 16 is a schematic flowchart of self-guided multi-level super-resolution processing according to an embodiment of this application.

As shown in FIG. 16, it is assumed that a resolution of an input original-resolution image is W×H, and a multi-scale self-guided map obtained by downsampling and feature extraction processing is an image feature whose resolution is W/2×H/2 and an image feature whose resolution is W/4×H/4. The multi-scale guide map may be used as prior information and then spliced to an output feature of the super-resolution process at each level, to guide the super-resolution processing. For example, at a scale whose resolution is W/2×H/2, a scale of a texture attention image feature is first performed to obtain a texture attention image feature whose resolution is W/4×H/4. A dot product operation, that is, multiplication performed pixel by pixel, is performed on the texture attention image feature whose resolution is W/4×H/4 and an enhanced HDR image whose resolution is W/4×H/4. Then, the image feature obtained after the dot product processing is spliced to the image feature of the original-resolution input image whose resolution is W/4×H/4, that is, concatenation. Similarly, at a scale whose resolution is W/2×H/2, a scale of the texture attention image feature is first adjusted to obtain a texture attention image feature whose resolution is W/2×H/2. A dot product operation, that is, multiplication performed pixel by pixel, is performed on the texture attention image feature whose resolution is W/2×H/2 and an enhanced HDR image whose resolution is W/2×H/2. Then, the image feature obtained after the dot product processing is spliced to the image feature of the original-resolution input image whose resolution is W/2×H/2, that is, concatenation. Finally, an upsampling operation and a convolution operation are performed on the concatenated image feature whose resolution is W/2×H/2, to obtain the original-resolution enhanced image.

It should be understood that the foregoing uses a three-level progressive super-resolution process with a resolution of W/4×H/4, a resolution of W/2×H/2, and a resolution of W×H as an example for description. Another multi-level progressive restoration may also be performed, and this is not limited in this application.

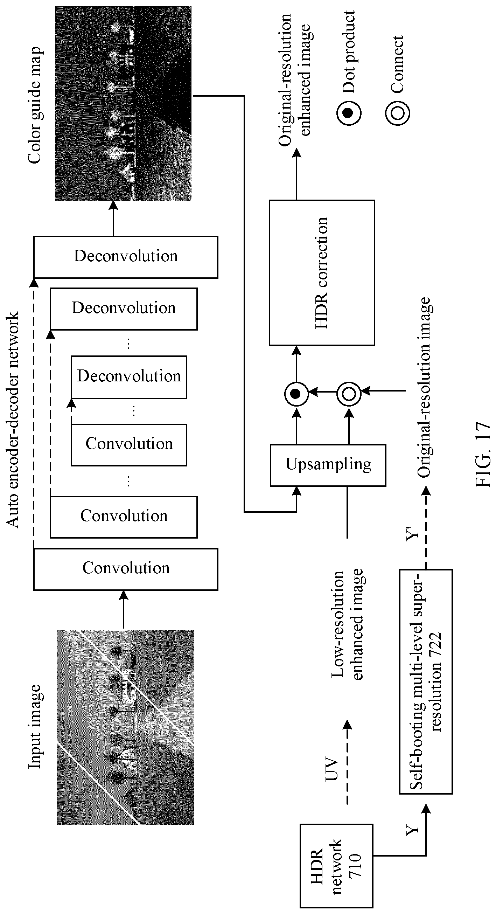

FIG. 17 is a schematic diagram of an HDR correction based on a color guide map after a multi-scale image feature is introduced. As shown in FIG. 17, an example in which super-resolution processing is performed on a YUV domain image is used for detailed description. A low-resolution image may refer to image features of a U channel and a V channel of a low-resolution HDR image, an original-resolution image may refer to an image feature of a Y channel extracted from an image output by the self-guided multi-level super-resolution unit 722. An upsampling operation is performed on image features of the U channel and the V channel of the low-resolution image, to enable a scale of the image feature to be the same as that of the original-resolution image. Then, a splicing operation, that is, concatenation, is performed on the image features of the upsampled U channel and V channel and the image feature of the Y channel of the original-resolution image. Then, the concatenated YUV image is converted into an RGB image. The color guide map is upsampled, to enable a scale of the color guide map to be the same as that of the original-resolution image. A dot product, that is, multiplication performed pixel by pixel, is performed on the converted RGB image and the upsampled color guide map. Further, HDR correction, that is, a convolution operation, is performed on the image obtained by performing the dot product operation. Therefore, a difference between the finally-output original-resolution enhanced image and the truth image is less than a preset threshold.

It should be noted that, if the color guide map is obtained by using the original-resolution image, upsampling operation does not need to be performed on the color guide map.

It should be understood that an auto encoder-decoder network in FIG. 17 may be the same as that in FIG. 12, and details are not described herein again. Similarly, the HDR correction unit may also be the same as the HDR correction unit in FIG. 12. Reference may be made to the description in FIG. 12, and details are not described herein again.

**Table 1**

| Model | HDRNet | RSGUNet | SGN | Present solution | Present solution (without an attention mechanism) |
|---|---|---|---|---|---|
| Processing time (ms) | 73 | 101 | 175 | 32 | 31.3 |
| PSNR (dB) | 31.31 | 27.74 | 23.19 | 30.73 | 29.95 |
| SSIM | 0.9837 | 0.9811 | 0.9454 | 0.9818 | 0.9803 |
| Calculation amount (GMAC) | 11.5 | 109 | 395 | 1.54 | 1.534 |

Table 1 shows performance test results of the image enhancement method and a reference algorithm in this embodiment of this application. Table 1 shows performance test results of the model in this application and several existing models during image enhancement processing. Test indicators are a peak signal to noise ratio (peak signal to noise ratio, PSNR), a structural similarity index (structural similarity index, SSIM), and a calculation amount, where the calculation amount represents a quantity of executing multiply accumulate (multiply accumulate, MAC), and $1G = 10^9$.

It can be learned from the test experiment results shown in Table 1 that quantitative indicators PSNR and SSIM of the neural network model in this solution are far beyond those of a range scaling global U-Net (range scaling global U-Net, RSGUnet) and a self-guided network (self-guided network, SGN). In addition, when the PSNR and SSIM loss are 1.85% and 0.26%, in comparison with the HDRNet, processing time of a single frame is reduced by 56.2% and the calculation amount of the single frame is reduced by 86.6%. In a same test environment, it can be learned that the image enhancement method provided in this embodiment of this application has a better processing speed and calculation overheads, and can meet a requirement for an image quality enhancement effect and real-time processing.

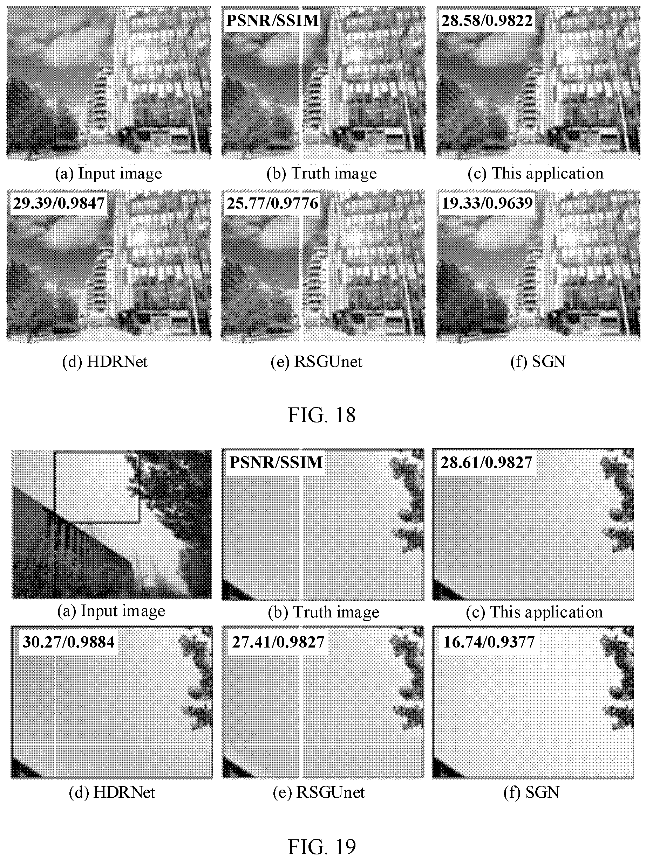

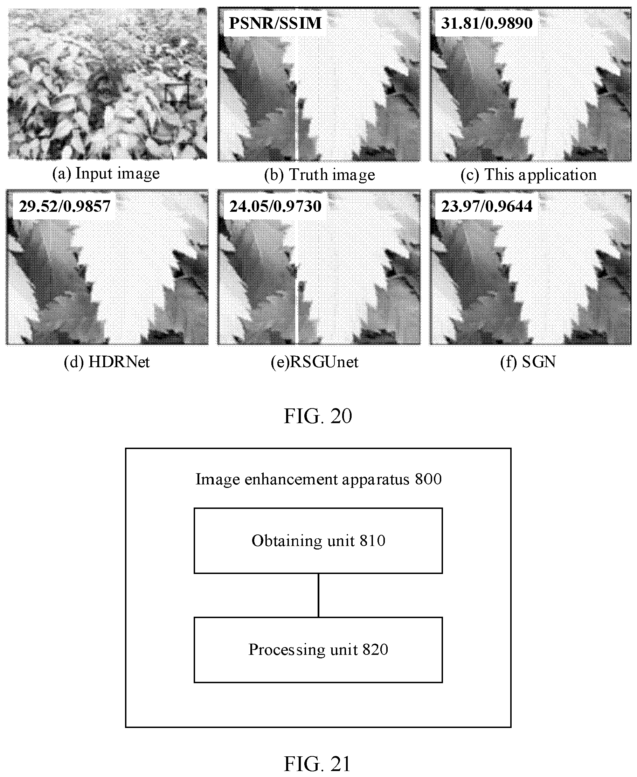

FIG. 18 to FIG. 20 are schematic diagrams of assessment results of image enhancement quality according to an embodiment of this application. (a) in FIG. 18 is an input image, that is, a to-be-processed image; (b) in FIG. 18 is a truth image corresponding to an input image; (c) in FIG. 18 is an output image obtained by performing enhancement processing on an input image by using the image enhancement method in this application. (d) in FIG. 18 is an output image obtained by performing enhancement processing on an input image by using an HDRNet model; (e) in FIG. 18 is an output image obtained by performing enhancement processing on an input image by using an RSGUnet model; and (f) in FIG. 18 is an output image obtained by performing enhancement processing on an input image by using an SGN model. It can be learned from (a) in FIG. 18 to (f) in FIG. 18 that the output image obtained in this embodiment of this application is closest to the truth image, and there is no problem such as artifacts. Similarly, it can be learned from (a) in FIG. 19 to (f) in FIG. 19 that, for a halo in the sky in the output image obtained in this embodiment of this application, the image enhancement method in this embodiment of this application can weaken the halo while ensuring HDR effect. Similarly, it can be learned from (a) in FIG. 20 to (f) in FIG. 20 that, for a highlighted part of the output image in this embodiment of this application, color is closer to that of the truth image, and restored texture details of the leaf veins are clear.

It should be noted that the foregoing example description is merely intended to help a person skilled in the art understand embodiments of this application, instead of limiting embodiments of this application to the illustrated specific value or specific scenario. A person skilled in the art definitely can make various equivalent modifications or changes based on the examples described above, and such modifications or changes also fall within the scope of embodiments of this application.

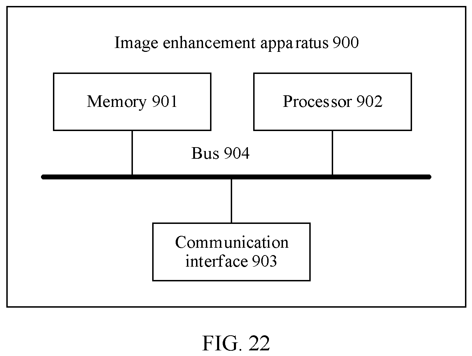

The foregoing describes in detail the image enhancement method provided in the embodiments of this application with reference to FIG. 1 to FIG. 20. The following describes in detail apparatus embodiments of this application with reference to FIG. 21 and FIG. 22. It should be understood that the image enhancement apparatus in this embodiment of this application may perform various image enhancement methods in the foregoing embodiments of this application. To be specific, for specific working processes of the following products, refer to corresponding processes in the foregoing method embodiments.

FIG. 21 is a schematic block diagram of an image enhancement apparatus according to an embodiment of this application. It should be understood that an image enhancement apparatus 800 may perform the image enhancement method shown in FIG. 10. The image enhancement apparatus 800 includes an obtaining unit 810 and a processing unit 820.

The obtaining unit 810 is configured to obtain a first high dynamic range HDR image corresponding to a to-be-processed image and a color image feature of the to-be-processed image, where the to-be-processed image is an image of a first resolution, the first HDR image is an image of a second resolution, the first resolution is higher than the second resolution, and the color image feature indicates different luminance regions or different color change regions in the to-be-processed image. The processing unit 820 is configured to: input the first HDR image into a neural network model for performing super-resolution processing; and perform, by using the neural network model, image enhancement processing on the super-resolution processed first HDR image and the color image feature, to obtain a second HDR image corresponding to the to-be-processed image, where the second HDR image is an HDR image whose resolution is the first resolution.

Optionally, in an embodiment, the obtaining unit 810 is further configured to:

obtain a texture image feature of the to-be-processed image, where the texture image feature indicates an edge region or a texture region of the to-be-processed image.

The processing unit 820 is specifically configured to:

perform, by using the neural network model, the super-resolution processing on the first HDR image based on the texture image feature.

Optionally, in an embodiment, the obtaining unit 810 is further configured to:

obtain a multi-scale image feature of the to-be-processed image, where the multi-scale image feature indicates image information of the to-be-processed image at different scales, and a scale of any one image feature in the multi-scale image feature is different.

The processing unit 820 is specifically configured to:

perform, by using the neural network model, the super-resolution processing on the first HDR image based on the multi-scale image feature.

Optionally, in an embodiment, the obtaining unit 810 is further configured to:

obtain a texture image feature of the to-be-processed image, where the texture image feature indicates an edge region or a texture region of the to-be-processed image; obtain a multi-scale image feature of the to-be-processed image, where the multi-scale image feature indicates image information of the to-be-processed image at different scales, and a scale of any one image feature in the multi-scale image feature is different.

The processing unit 820 is specifically configured to:

perform, by using the neural network model, the super-resolution processing on the first HDR image based on the texture image feature and the multi-scale image feature.

Optionally, in an embodiment, the obtaining unit 810 is specifically configured to:

obtain a texture image feature at a first scale, where a scale of the texture image feature at the first scale is the same as that of a first-scale image feature in a multi-scale image.

The processing unit 820 is specifically configured to:

perform, by using the neural network model, a dot product on the first HDR image and the texture image feature at the first scale, to obtain a third image feature; and perform, by using the neural network model, a channel combination operation, a convolution operation, and an upsampling operation on the third image feature and the first-scale image feature.

Optionally, in an embodiment, the processing unit 820 is specifically configured to:

perform, by using the neural network model, the dot product operation and the convolution operation on the super-resolution processed first HDR image and the color image feature, to obtain the second HDR image.

It should be noted that the image enhancement apparatus 800 is embodied in a form of a functional unit. The term "unit" herein may be implemented in a form of software and/or hardware. This is not specifically limited.

For example, the "unit" may be a software program, a hardware circuit, or a combination thereof for implementing the foregoing function. The hardware circuit may include an application-specific integrated circuit (ASIC), an electronic circuit, a processor (for example, a shared processor, a dedicated processor, or a group processor) configured to execute one or more software or firmware programs and a memory, a merged logic circuit, and/or another appropriate component that supports the described function.

Therefore, the units in the examples described in this embodiment of this application can be implemented by using electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

FIG. 22 is a schematic diagram of a hardware structure of an image enhancement apparatus according to an embodiment of this application. An image enhancement apparatus 900 (the apparatus 900 may be specifically a computer device) shown in FIG. 22 includes a memory 901, a processor 902, a communication interface 903, and a bus 904. A communication connection between the memory 901, the processor 902, and the communication interface 903 is implemented by using the bus 904.

The memory 901 may be a read-only memory (read-only memory, ROM), a static storage device, a dynamic storage device, or a random access memory (random access memory, RAM). The memory 901 may store a program. When the program stored in the memory 901 is executed by the processor 902, the processor 902 is configured to perform the steps of the image enhancement method in the embodiments of this application, for example, perform the steps shown in FIG. 10 or FIG. 17.

It should be understood that the image enhancement apparatus shown in this embodiment of this application may be a server, for example, may be a server in a cloud, or may be a chip configured in a server in a cloud. Alternatively, the image enhancement apparatus shown in this embodiment of this application may be an intelligent terminal, or may be a chip configured in the intelligent terminal.

The image enhancement method disclosed in the foregoing embodiments of this application may be applied to the processor 902, or may be implemented by the processor 902. The processor 902 may be an integrated circuit chip, and has a signal processing capability. In an implementation process, steps of the image enhancement method may be accomplished by using an integrated logic circuit of hardware in the processor 902 or instructions in a form of software. For example, the processor 902 may be a chip including the NPU shown in FIG. 8.

The processor 902 may be a central processing unit (central processing unit, CPU), a graphics processing unit (graphics processing unit, GPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory 901. The processor 902 reads instructions in the memory 901, and completes, in combination with hardware of the processor 902, functions that need to be performed by the units included in the image enhancement apparatus shown in FIG. 21 in embodiments of this application, or performs the steps of the image enhancement methods shown in FIG. 10 or FIG. 17 in the method embodiments of this application.

The communication interface 903 uses a transceiver apparatus, for example but not for limitation, a transceiver, to implement communication between the apparatus 900 and another device or communication network.

The bus 904 may include a path for transmitting information between the components (for example, the memory 901, the processor 902, and the communication interface 903) of the image enhancement apparatus 900.

It should be noted that although only the memory, the processor, and the communication interface in the image enhancement apparatus 900 are shown, in a specific implementation process, a person skilled in the art should understand that the image enhancement apparatus 900 may further include another component required for implementing normal running. In addition, based on a specific requirement, a person skilled in the art should understand that the image enhancement apparatus 900 may further include a hardware component for implementing another additional function. In addition, a person skilled in the art should understand that the addressing apparatus 900 may include only components required for implementing this embodiment of this application, but does not need to include all the components shown in FIG. 22.

An embodiment of this application further provides a chip, and the chip includes a transceiver unit and a processing unit. The transceiver unit may be an input/output circuit or a communication interface. The processing unit is a processor, a microprocessor, or an integrated circuit integrated on the chip. The chip may perform the image enhancement method in the foregoing method embodiments.

An embodiment of this application further provides a computer-readable storage medium. The computer-readable storage medium stores instructions. When the instructions are executed, the image enhancement method in the foregoing method embodiments is performed.

An embodiment of this application further provides a computer program product including instructions. When the instructions are executed, the method in the foregoing method embodiments is performed.

It should also be understood that in embodiments of this application, the memory may include a read-only memory and a random access memory, and provide instructions and data to the processor. A part of the processor may further include a non-volatile random access memory. For example, the processor may further store information of a device type.

It should also be understood that in embodiments of this application, the memory may include a read-only memory and a random access memory, and provide instructions and data to the processor. A part of the processor may further include a non-volatile random access memory. For example, the processor may further store information of a device type.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional modules in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM). a magnetic disk, or an optical disc.

The foregoing descriptions are merely specific implementations of this application, but are not intended to limit the protection scope of this application. Therefore, the protection scope of this application shall be subject to the protection scope of the claims.

**Claims**

1. An image enhancement processor implemented method, comprising:

    obtaining (610) a first high dynamic range, HDR image corresponding to a to-be-processed image and a color image feature of the to-be-processed image, wherein the color image feature indicates different luminance regions or different color change regions in the to-be-processed image, the to-be-processed image is an image of a first resolution, the first HDR image is an image of a second resolution, and the first resolution is higher than the second resolution;
    inputting (620) the first HDR image and the color image feature into a neural network model for performing super-resolution processing; and
    performing (630), by using the neural network model, super-resolution processing on the first HDR image based on the color image feature, to obtain a second HDR image corresponding to the to-be-processed image, wherein the second HDR image is an HDR image whose resolution is the first resolution.

2. The image enhancement method according to claim 1, wherein the method further comprises:

    obtaining a texture image feature of the to-be-processed image, wherein the texture image feature indicates an edge region or a texture region of the to-be-processed image; and
    the inputting the first HDR image into a neural network model for performing super-resolution processing comprises:
    performing, by using the neural network model, the super-resolution processing on the first HDR image based on the texture image feature.

3. The image enhancement method according to claim 1, wherein the method further comprises:

    obtaining a multi-scale image feature of the to-be-processed image, wherein the multi-scale image feature indicates image information of the to-be-processed image at different scales, and a scale of any one image feature in the multi-scale image feature is different; and
    the inputting the first HDR image into a neural network model for performing super-resolution processing comprises:
    performing, by using the neural network model, the super-resolution processing on the first HDR image based on the multi-scale image feature.

4. The image enhancement method according to claim 1, wherein the method further comprises:

    obtaining a texture image feature of the to-be-processed image, wherein the texture image feature indicates an edge region or a texture region of the to-be-processed image; and
    obtaining a multi-scale image feature of the to-be-processed image, wherein the multi-scale image feature indicates image information of the to-be-processed image at different scales, and a scale of any one image feature in the multi-scale image feature is different; and
    the inputting the first HDR image into a neural network model for performing super-resolution processing comprises:
    performing, by using the neural network model, the super-resolution processing on the first HDR image based on the texture image feature and the multi-scale image feature.

5. The image enhancement method according to claim 4, wherein the performing, by using the neural network model, the super-resolution processing on the first HDR image based on the texture image feature and the multi-scale image feature comprises:

obtaining a texture image feature at a first scale, wherein a scale of the texture image feature at the first scale is the same as that of a first-scale image feature in a multi-scale image;

performing, by using the neural network model, a dot product on the first HDR image and the texture image feature at the first scale, to obtain a third image feature; and

performing, by using the neural network model, a channel combination operation, a convolution operation, and an upsampling operation on the third image feature and the first-scale image feature.

6. The image enhancement method according to any one of claims 1 to 5, wherein the performing, by using the neural network model, super-resolution processing on the first HDR image based on the color image feature, to obtain a second HDR image corresponding to the to-be-processed image comprises:
performing, by using the neural network model, the dot product operation and the convolution operation on the super-resolution processed first HDR image and the color image feature, to obtain the second HDR image.

7. An image enhancement apparatus (800), comprising:

an obtaining unit (810), configured to obtain (610) a first high dynamic range, HDR image corresponding to a to-be-processed image and a color image feature of the to-be-processed image, wherein the color image feature indicates different luminance regions or different color change regions in the to-be-processed image, the to-be-processed image is an image of a first resolution, the first HDR image is an image of a second resolution, and the first resolution is higher than the second resolution; and

a processing unit (820), configured to input (620) the first HDR image and the color image feature into a neural network model for performing super-resolution processing; and perform (630), by using the neural network model, super-resolution processing on the first HDR image based on the color image feature, to obtain a second HDR image corresponding to the to-be-processed image, wherein the second HDR image is an HDR image whose resolution is the first resolution.

8. The image enhancement apparatus according to claim 7, wherein the obtaining unit (810) is further configured to:

obtain a texture image feature of the to-be-processed image, wherein the texture image feature indicates an edge region or a texture region of the to-be-processed image; and
the processing unit (820) is specifically configured to:
perform, by using the neural network model, the super-resolution processing on the first HDR image based on the texture image feature.

9. The image enhancement apparatus according to claim 7, wherein the obtaining unit (810) is further configured to:

obtain a multi-scale image feature of the to-be-processed image, wherein the multi-scale image feature indicates image information of the to-be-processed image at different scales, and a scale of any one image feature in the multi-scale image feature is different; and
the processing unit (820) is specifically configured to:
perform, by using the neural network model, the super-resolution processing on the first HDR image based on the multi-scale image feature.

10. The image enhancement apparatus according to claim 7, wherein the obtaining unit (810) is further configured to:

obtain a texture image feature of the to-be-processed image, wherein the texture image feature indicates an edge region or a texture region of the to-be-processed image; and
obtain a multi-scale image feature of the to-be-processed image, wherein the multi-scale image feature indicates image information of the to-be-processed image at different scales, and a scale of any one image feature in the multi-scale image feature is different; and
the processing unit (820) is specifically configured to:
perform, by using the neural network model, the super-resolution processing on the first HDR image based on the texture image feature and the multi-scale image feature.

11. The image enhancement apparatus according to claim 10, wherein the obtaining unit (810) is specifically configured to:

obtain a texture image feature at a first scale, wherein a scale of the texture image feature at the first scale is the same as that of a first-scale image feature in a multi-scale image;
the processing unit (820) is specifically configured to:

perform, by using the neural network model, a dot product on the first HDR image and the texture image feature at the first scale to obtain a third image feature; and
perform, by using the neural network model, a channel combination operation, a convolution operation, and an upsampling operation on the third image feature and the first-scale image feature.

12. The image enhancement apparatus according to any one of claims 7 to 11, wherein the processing unit (820) is specifically configured to:
perform, by using the neural network model, the dot product operation and the convolution operation on the super-resolution processed first HDR image and the color image feature, to obtain the second HDR image.

13. An image enhancement apparatus (900), comprising:

a memory (901), configured to store a program; and
a processor (902), configured to execute the program stored in the memory, wherein when the processor executes the program stored in the memory, the processor is configured to perform the image enhancement method according to any one of claims 1 to 6.

14. A computer-readable medium, wherein the computer-readable medium stores program code, and when the computer program code is run on a computer, the computer is enabled to perform the image enhancement method according to any one of claims 1 to 6.

**Patentansprüche**

1. Prozessor-implementiertes Bildverbesserungsverfahren, umfassend:

Erlangen (610) eines ersten Bildes mit hohem Dynamikumfang, HDR-Bildes, das einem zu verarbeitenden Bild entspricht, und eines Farbbildmerkmals des zu verarbeitenden Bildes, wobei das Farbbildmerkmal unterschiedliche Luminanzbereiche oder unterschiedliche Farbänderungsbereiche in dem zu verarbeitenden Bild angibt, das zu verarbeitende Bild ein Bild mit einer ersten Auflösung ist, das erste HDR-Bild ein Bild mit einer zweiten Auflösung ist und die erste Auflösung höher als die zweite Auflösung ist;
Eingeben (620) des ersten HDR-Bildes und des Farbbildmerkmals in ein neuronales Netzwerkmodell zum Durchführen einer Superauflösungsverarbeitung; und
Durchführen (630), unter Verwendung des neuronalen Netzwerkmodells, einer Superauflösungsverarbeitung an dem ersten HDR-Bild basierend auf dem Farbbildmerkmal, um ein zweites HDR-Bild zu erlangen, das dem zu verarbeitenden Bild entspricht, wobei das zweite HDR-Bild ein HDR-Bild ist, dessen Auflösung die erste Auflösung ist.

2. Bildverbesserungsverfahren nach Anspruch 1, wobei das Verfahren ferner Folgendes umfasst:

Erlangen eines Textur-Bildmerkmals des zu verarbeitenden Bildes, wobei das Textur-Bildmerkmal einen Randbereich oder einen Texturbereich des zu verarbeitenden Bildes angibt; und
das Eingeben des ersten HDR-Bildes in ein neuronales Netzwerkmodell zum Durchführen einer Superauflösungsverarbeitung Folgendes umfasst:
Durchführen, unter Verwendung des neuronalen Netzwerkmodells, der Superauflösungsverarbeitung an dem ersten HDR-Bild basierend auf dem Textur-Bildmerkmal.

3. Bildverbesserungsverfahren nach Anspruch 1, wobei das Verfahren ferner Folgendes umfasst:

Erlangen eines Multiskalen-Bildmerkmals des zu verarbeitenden Bildes, wobei das Multiskalen-Bildmerkmal Bildinformationen des zu verarbeitenden Bildes auf verschiedenen Skalen angibt und eine Skala eines jeden einzelnen Bildmerkmals in dem Multiskalen-Bildmerkmal unterschiedlich ist; und
das Eingeben des ersten HDR-Bildes in ein neuronales Netzwerkmodell zum Durchführen einer Superauflösungsverarbeitung Folgendes umfasst:

Durchführen, unter Verwendung des neuronalen Netzwerkmodells, der Superauflösungsverarbeitung an dem ersten HDR-Bild basierend auf dem Multiskalen-Bildmerkmal.

4. Bildverbesserungsverfahren nach Anspruch 1, wobei das Verfahren ferner Folgendes umfasst:

Erlangen eines Textur-Bildmerkmals des zu verarbeitenden Bildes, wobei das Textur-Bildmerkmal einen Randbereich oder einen Texturbereich des zu verarbeitenden Bildes angibt; und
Erlangen eines Multiskalen-Bildmerkmals des zu verarbeitenden Bildes, wobei das Multiskalen-Bildmerkmal Bildinformationen des zu verarbeitenden Bildes auf verschiedenen Skalen angibt und eine Skala eines jeden einzelnen Bildmerkmals in dem Multiskalen-Bildmerkmal unterschiedlich ist; und
das Eingeben des ersten HDR-Bildes in ein neuronales Netzwerkmodell zum Durchführen einer Superauflösungsverarbeitung Folgendes umfasst:
Durchführen, unter Verwendung des neuronalen Netzwerkmodells, der Superauflösungsverarbeitung an dem ersten HDR-Bild basierend auf dem Textur-Bildmerkmal und dem Multiskalen-Bildmerkmal.

5. Bildverbesserungsverfahren nach Anspruch 4, wobei das Durchführen, unter Verwendung des neuronalen Netzwerkmodells, der Superauflösungsverarbeitung an dem ersten HDR-Bild basierend auf dem Textur-Bildmerkmal und dem Multiskalen-Bildmerkmal Folgendes umfasst:

Erlangen eines Textur-Bildmerkmals auf einer ersten Skala, wobei eine Skala des Textur-Bildmerkmals auf der ersten Skala mit derjenigen eines Erste-Skala-Bildmerkmals in einem Multiskalen-Bild übereinstimmt;
Durchführen, unter Verwendung des neuronalen Netzwerkmodells, eines Punktprodukts auf dem ersten HDR-Bild und dem Textur-Bildmerkmal auf der ersten Skala, um ein drittes Bildmerkmal zu erlangen; und
Durchführen, unter Verwendung des neuronalen Netzwerkmodells, einer Kanalkombinationsoperation, einer Faltungsoperation und einer Upsampling-Operation an dem dritten Bildmerkmal und dem Erste-Skala-Bildmerkmal.

6. Bildverbesserungsverfahren nach einem der Ansprüche 1 bis 5, wobei das Durchführen, unter Verwendung des neuronalen Netzwerkmodells, einer Superauflösungsverarbeitung an dem ersten HDR-Bild basierend auf dem Farbbildmerkmal, um ein zweites HDR-Bild zu erlangen, das dem zu verarbeitenden Bild entspricht, Folgendes umfasst:
Durchführen, unter Verwendung des neuronalen Netzwerkmodells, der Punktprodukt-Operation und der Faltungsoperation an dem mit Superauflösung verarbeiteten ersten HDR-Bild und dem Farbbildmerkmal, um das zweite HDR-Bild zu erlangen.

7. Bildverbesserungsvorrichtung (800), umfassend:

eine Erlangungseinheit (810), die dazu konfiguriert ist, ein erstes Bild mit hohem Dynamikumfang, HDR-Bild, das einem zu verarbeitenden Bild entspricht, und ein Farbbildmerkmal des zu verarbeitenden Bildes zu erlangen (610), wobei das Farbbildmerkmal unterschiedliche Luminanzbereiche oder unterschiedliche Farbänderungsbereiche in dem zu verarbeitenden Bild angibt, das zu verarbeitende Bild ein Bild mit einer ersten Auflösung ist, das erste HDR-Bild ein Bild mit einer zweiten Auflösung ist und die erste Auflösung höher als die zweite Auflösung ist; und
eine Verarbeitungseinheit (820), die dazu konfiguriert ist, das erste HDR-Bild und das Farbbildmerkmal in ein neuronales Netzwerkmodell zum Durchführen einer Superauflösungsverarbeitung einzugeben (620); und, unter Verwendung des neuronalen Netzwerkmodells, eine Superauflösungsverarbeitung an dem ersten HDR-Bild basierend auf dem Farbbildmerkmal durchzuführen (630), um ein zweites HDR-Bild zu erlangen, das dem zu verarbeitenden Bild entspricht, wobei das zweite HDR-Bild ein HDR-Bild ist, dessen Auflösung die erste Auflösung ist.

8. Bildverbesserungsvorrichtung nach Anspruch 7, wobei die Erlangungseinheit (810) ferner zu Folgendem konfiguriert ist:

Erlangen eines Textur-Bildmerkmals des zu verarbeitenden Bildes, wobei das Textur-Bildmerkmal einen Randbereich oder einen Texturbereich des zu verarbeitenden Bildes angibt; und
die Verarbeitungseinheit (820) insbesondere zu Folgendem konfiguriert ist:
Durchführen, unter Verwendung des neuronalen Netzwerkmodells, der Superauflösungsverarbeitung an dem ersten HDR-Bild basierend auf dem Textur-Bildmerkmal.

9. Bildverbesserungsvorrichtung nach Anspruch 7, wobei die Erlangungseinheit (810) ferner zu Folgendem konfiguriert ist:

Erlangen eines Multiskalen-Bildmerkmals des zu verarbeitenden Bildes, wobei das Multiskalen-Bildmerkmal Bildinformationen des zu verarbeitenden Bildes auf verschiedenen Skalen angibt und eine Skala eines jeden einzelnen Bildmerkmals in dem Multiskalen-Bildmerkmal unterschiedlich ist; und
die Verarbeitungseinheit (820) insbesondere zu Folgendem konfiguriert ist:
Durchführen, unter Verwendung des neuronalen Netzwerkmodells, der Superauflösungsverarbeitung an dem ersten HDR-Bild basierend auf dem Multiskalen-Bildmerkmal.

10. Bildverbesserungsvorrichtung nach Anspruch 7, wobei die Erlangungseinheit (810) ferner zu Folgendem konfiguriert ist:

Erlangen eines Textur-Bildmerkmals des zu verarbeitenden Bildes, wobei das Textur-Bildmerkmal einen Randbereich oder einen Texturbereich des zu verarbeitenden Bildes angibt; und
Erlangen eines Multiskalen-Bildmerkmals des zu verarbeitenden Bildes, wobei das Multiskalen-Bildmerkmal Bildinformationen des zu verarbeitenden Bildes auf verschiedenen Skalen angibt und eine Skala eines jeden einzelnen Bildmerkmals in dem Multiskalen-Bildmerkmal unterschiedlich ist; und
die Verarbeitungseinheit (820) insbesondere zu Folgendem konfiguriert ist:
Durchführen, unter Verwendung des neuronalen Netzwerkmodells, der Superauflösungsverarbeitung an dem ersten HDR-Bild basierend auf dem Textur-Bildmerkmal und dem Multiskalen-Bildmerkmal.

11. Bildverbesserungsvorrichtung nach Anspruch 10, wobei die Erlangungseinheit (810) insbesondere zu Folgendem konfiguriert ist:

Erlangen eines Textur-Bildmerkmals auf einer ersten Skala, wobei eine Skala des Textur-Bildmerkmals auf der ersten Skala mit derjenigen eines Erste-Skala-Bildmerkmals in einem Multiskalen-Bild übereinstimmt;
die Verarbeitungseinheit (820) insbesondere zu Folgendem konfiguriert ist:

Durchführen, unter Verwendung des neuronalen Netzwerkmodells, eines Punktprodukts auf dem ersten HDR-Bild und dem Textur-Bildmerkmal auf der ersten Skala, um ein drittes Bildmerkmal zu erlangen; und
Durchführen, unter Verwendung des neuronalen Netzwerkmodells, einer Kanalkombinationsoperation, einer Faltungsoperation und einer Upsampling-Operation an dem dritten Bildmerkmal und dem Erste-Skala-Bildmerkmal.

12. Bildverbesserungsvorrichtung nach einem der Ansprüche 7 bis 11, wobei die Verarbeitungseinheit (820) insbesondere zu Folgendem konfiguriert ist:
Durchführen, unter Verwendung des neuronalen Netzwerkmodells, der Punktprodukt-Operation und der Faltungsoperation an dem mit Superauflösung verarbeiteten ersten HDR-Bild und dem Farbbildmerkmal, um das zweite HDR-Bild zu erlangen.

13. Bildverbesserungsvorrichtung (900), umfassend:

einen Speicher (901), der dazu konfiguriert ist, ein Programm zu speichern; und
einen Prozessor (902), der dazu konfiguriert ist, das Programm, das in dem Speicher gespeichert ist, auszuführen, wobei, wenn der Prozessor das Programm, das in dem Speicher gespeichert ist, ausführt, der Prozessor dazu konfiguriert ist, das Bildverbesserungsverfahren nach einem der Ansprüche 1 bis 6 durchzuführen.

14. Computerlesbares Medium, wobei das computerlesbare Medium einen Programmcode speichert und, wenn der Computerprogrammcode auf einem Computer ausgeführt wird, der Computer dazu in die Lage versetzt wird, das Bildverbesserungsverfahren nach einem der Ansprüche 1 bis 6 durchzuführen.

**Revendications**

1. Procédé mis en œuvre par un processeur d'amélioration d'image, comprenant :

l'obtention (610) d'une première image à grande gamme dynamique, HDR, correspondant à une image à traiter et à une caractéristique d'image couleur de l'image à traiter, dans lequel la caractéristique d'image couleur indique des régions de luminance différentes ou des régions de changement de couleur différentes dans l'image à traiter, l'image à traiter est une image d'une première résolution, la première image HDR est une image d'une seconde résolution, et la première résolution est supérieure à la seconde résolution ;

l'entrée (620) de la première image HDR et de la caractéristique d'image couleur dans un modèle de réseau neuronal pour réaliser un traitement de super-résolution ; et

la réalisation (630), à l'aide du modèle de réseau neuronal, d'un traitement de super-résolution sur la première image HDR sur la base de la caractéristique d'image couleur, pour obtenir une seconde image HDR correspondant à l'image à traiter, dans lequel la seconde image HDR est une image HDR dont la résolution est la première résolution.

2. Procédé d'amélioration d'image selon la revendication 1, dans lequel le procédé comprend également :

l'obtention d'une caractéristique d'image de texture de l'image à traiter, dans lequel la caractéristique d'image de texture indique une région de bord ou une région de texture de l'image à traiter ; et
l'entrée de la première image HDR dans un modèle de réseau neuronal pour réaliser un traitement de super-résolution comprend :
la réalisation, à l'aide du modèle de réseau neuronal, du traitement de super-résolution sur la première image HDR sur la base de la caractéristique d'image de texture.

3. Procédé d'amélioration d'image selon la revendication 1, dans lequel le procédé comprend également :

l'obtention d'une caractéristique d'image multi-échelle de l'image à traiter, dans lequel la caractéristique d'image multi-échelle indique des informations d'image de l'image à traiter à différentes échelles, et une échelle d'une quelconque caractéristique d'image dans la caractéristique d'image multi-échelle est différente ; et
l'entrée de la première image HDR dans un modèle de réseau neuronal pour réaliser un traitement de super-résolution comprend :
la réalisation, à l'aide du modèle de réseau neuronal, du traitement de super-résolution sur la première image HDR sur la base de la caractéristique d'image multi-échelle.

4. Procédé d'amélioration d'image selon la revendication 1, dans lequel le procédé comprend également :

l'obtention d'une caractéristique d'image de texture de l'image à traiter, dans lequel la caractéristique d'image de texture indique une région de bord ou une région de texture de l'image à traiter ; et
l'obtention d'une caractéristique d'image multi-échelle de l'image à traiter, dans lequel la caractéristique d'image multi-échelle indique des informations d'image de l'image à traiter à différentes échelles, et une échelle d'une quelconque caractéristique d'image dans la caractéristique d'image multi-échelle est différente ; et
l'entrée de la première image HDR dans un modèle de réseau neuronal pour réaliser un traitement de super-résolution comprend :
la réalisation, à l'aide du modèle de réseau neuronal, du traitement de super-résolution sur la première image HDR sur la base de la caractéristique d'image de texture et de la caractéristique d'image multi-échelle.

5. Procédé d'amélioration d'image selon la revendication 4, dans lequel la réalisation, à l'aide du modèle de réseau neuronal, du traitement de super-résolution sur la première image HDR sur la base de la caractéristique d'image de texture et de la caractéristique d'image multi-échelle comprend :

l'obtention d'une caractéristique d'image de texture à une première échelle, dans lequel une échelle de la caractéristique d'image de texture à la première échelle est la même que celle d'une caractéristique d'image de première échelle dans une image multi-échelle ;
la réalisation, à l'aide du modèle de réseau neuronal, d'un produit scalaire entre la première image HDR et la caractéristique d'image de texture à la première échelle, pour obtenir une troisième caractéristique d'image ; et
la réalisation, à l'aide du modèle de réseau neuronal, d'une opération de combinaison de canaux, d'une opération de convolution et d'une opération de suréchantillonnage sur la troisième caractéristique d'image et la caractéristique d'image de première échelle.

6. Procédé d'amélioration d'image selon l'une quelconque des revendications 1 à 5, dans lequel la réalisation, à l'aide du modèle de réseau neuronal, d'un traitement de super-résolution sur la première image HDR sur la base de la caractéristique d'image couleur, pour obtenir une seconde image HDR correspondant à l'image à traiter, comprend :

la réalisation, à l'aide du modèle de réseau neuronal, de l'opération de produit scalaire et de l'opération de convolution sur la première image HDR traitée en super-résolution et la caractéristique d'image couleur, pour obtenir la seconde image HDR.

7. Appareil d'amélioration d'image (800), comprenant :

une unité d'obtention (810), configurée pour obtenir (610) une première image à grande gamme dynamique, HDR, correspondant à une image à traiter et à une caractéristique d'image couleur de l'image à traiter, dans lequel la caractéristique d'image couleur indique des régions de luminance différentes ou des régions de changement de couleur différentes dans l'image à traiter, l'image à traiter est une image d'une première résolution, la première image HDR est une image d'une seconde résolution, et la première résolution est supérieure à la seconde résolution ; et

une unité de traitement (820), configurée pour entrer (620) la première image HDR et la caractéristique d'image couleur dans un modèle de réseau neuronal pour réaliser un traitement de super-résolution ; et réaliser (630), à l'aide du modèle de réseau neuronal, un traitement de super-résolution sur la première image HDR sur la base de la caractéristique d'image couleur, pour obtenir une seconde image HDR correspondant à l'image à traiter, dans lequel la seconde image HDR est une image HDR dont la résolution est la première résolution.

8. Appareil d'amélioration d'image selon la revendication 7, dans lequel l'unité d'obtention (810) est également configurée pour :

obtenir une caractéristique d'image de texture de l'image à traiter, dans lequel la caractéristique d'image de texture indique une région de bord ou une région de texture de l'image à traiter ; et
l'unité de traitement (820) est spécifiquement configurée pour :
réaliser, à l'aide du modèle de réseau neuronal, le traitement de super-résolution sur la première image HDR sur la base de la caractéristique d'image de texture.

9. Appareil d'amélioration d'image selon la revendication 7, dans lequel l'unité d'obtention (810) est également configurée pour :

obtenir une caractéristique d'image multi-échelle de l'image à traiter, dans lequel la caractéristique d'image multi-échelle indique des informations d'image de l'image à traiter à différentes échelles, et une échelle d'une quelconque caractéristique d'image dans la caractéristique d'image multi-échelle est différente ; et
l'unité de traitement (820) est spécifiquement configurée pour :
réaliser, à l'aide du modèle de réseau neuronal, le traitement de super-résolution sur la première image HDR sur la base de la caractéristique d'image multi-échelle.

10. Appareil d'amélioration d'image selon la revendication 7, dans lequel l'unité d'obtention (810) est également configurée pour :

obtenir une caractéristique d'image de texture de l'image à traiter, dans lequel la caractéristique d'image de texture indique une région de bord ou une région de texture de l'image à traiter ; et
obtenir une caractéristique d'image multi-échelle de l'image à traiter, dans lequel la caractéristique d'image multi-échelle indique des informations d'image de l'image à traiter à différentes échelles, et une échelle d'une quelconque caractéristique d'image dans la caractéristique d'image multi-échelle est différente ; et
l'unité de traitement (820) est spécifiquement configurée pour :
réaliser, à l'aide du modèle de réseau neuronal, le traitement de super-résolution sur la première image HDR sur la base de la caractéristique d'image de texture et de la caractéristique d'image multi-échelle.

11. Appareil d'amélioration d'image selon la revendication 10, dans lequel l'unité d'obtention (810) est spécifiquement configurée pour :

obtenir une caractéristique d'image de texture à une première échelle, dans lequel une échelle de la caractéristique d'image de texture à la première échelle est la même que celle d'une caractéristique d'image de première échelle dans une image multi-échelle ;
l'unité de traitement (820) est spécifiquement configurée pour :

réaliser, à l'aide du modèle de réseau neuronal, un produit scalaire entre la première image HDR et la caractéristique d'image de texture à la première échelle, pour obtenir une troisième caractéristique d'image ; et

réaliser, à l'aide du modèle de réseau neuronal, une opération de combinaison de canaux, une opération de convolution et une opération de suréchantillonnage sur la troisième caractéristique d'image et la caractéristique d'image de première échelle.

12. Appareil d'amélioration d'image selon l'une quelconque des revendications 7 à 11, dans lequel l'unité de traitement (820) est spécifiquement configurée pour :
réaliser, à l'aide du modèle de réseau neuronal, l'opération de produit scalaire et l'opération de convolution sur la première image HDR traitée en super-résolution et la caractéristique d'image couleur, pour obtenir la seconde image HDR.

13. Appareil d'amélioration d'image (900), comprenant :

une mémoire (901), configurée pour stocker un programme ; et
un processeur (902), configuré pour exécuter le programme stocké dans la mémoire, dans lequel lorsque le programme exécute le programme stocké dans la mémoire, le processeur est configuré pour réaliser le procédé d'amélioration d'image selon l'une quelconque des revendications 1 à 6.

14. Support lisible par ordinateur, dans lequel le support lisible par ordinateur stocke un code de programme, et lorsque le code de programme est exécuté sur un ordinateur, l'ordinateur est activé pour réaliser le procédé d'amélioration d'image selon l'une quelconque des revendications 1 à 6.

FIG. 1

FIG. 2

FIG. 3

FIG. 4

FIG. 5

FIG. 6

Image processing result

Output layer 340

Fully
connected
layer
330

Hidden layer n (33n)

Hidden Layer 2 (332)

Hidden Layer 1 (331)

Convolutional
layer/Pooling
layer
320

326

325

324

323

322

321

Convolutional
neural network
(CNN)
300

Input layer 310

To-be-processed image

FIG. 7

FIG. 8

500

Data storage
system 550

Execution device 510

Communication
network

Local device
520

Local device
530

For example

FIG. 9

<u>600</u>

```
Obtain a first high dynamic range HDR image corresponding to a to-be-
processed image and a color image feature of the to-be-processed image,
where the color image feature indicates different luminance regions or
different color change regions in the to-be-processed image, the to-be-          610
processed image is an image of a first resolution, the first HDR image is an
image of a second resolution, and the first resolution is higher than the
second resolution
```

```
Input the first HDR image into a neural network model for performing          620
super-resolution processing
```

```
Perform, by using the neural network model, image enhancement
processing on the super-resolution processed first HDR image and the color
image feature, to obtain a second HDR image corresponding to the to-be-          630
processed image, where the second HDR image is an HDR image whose
resolution is the first resolution
```

FIG. 10

```
┌─────────────────────────────────────────────────────────────────────────┐ 710
│  ┌──────────────┐    ┌──────────────┐    ┌───────────┐    ┌──────────────┐ │
│  │              │    │              │    │   Low-    │    │              │ │
│  │ Input image  │──▶ │ Downsampling │──▶ │resolution │──▶ │HDR enhancement│ │
│  │              │    │     711      │    │   image   │    │     712      │ │
│  └──────────────┘    └──────────────┘    └───────────┘    └──────────────┘ │
└─────────────────────────────────────────────────────────────────────────┘

┌─────────────────────────────────────────────────────────────────────────┐ 720
│  ┌──────────────┐    ┌──────────────┐    ┌──────────────┐    ┌──────────────┐
│  │   Color      │    │Super-resolution│  │              │    │              │
│  │ attention 721│    │ processing 722 │─▶│HDR correction 723│▶│Enhanced image│
│  └──────────────┘    └──────────────┘    └──────────────┘    └──────────────┘
└─────────────────────────────────────────────────────────────────────────┘
```

FIG. 11

Auto encoder-decoder network

Input image

Convolution

Convolution

...

Convolution

...

Deconvolution

...

Deconvolution

Deconvolution

Color guide map

Low-resolution
enhanced image

Upsampling

Original-resolution image

HDR correction

Original-resolution
enhanced image

● Dot product

◎ Connect

FIG. 12

EP 4 105 877 B1

FIG. 13

FIG. 14

FIG. 15

FIG. 16

Original-resolution enhanced image

FIG. 17

|(a) Input image|(b) Truth image|(c) This application|
|(d) HDRNet|(e) RSGUnet|(f) SGN|

FIG. 18

|(a) Input image|(b) Truth image|(c) This application|
|(d) HDRNet|(e) RSGUnet|(f) SGN|

FIG. 19

(a) Input image　　　　(b) Truth image　　　　(c) This application

(d) HDRNet　　　　(e)RSGUnet　　　　(f) SGN

FIG. 20

Image enhancement apparatus 800

Obtaining unit 810

Processing unit 820

FIG. 21

Image enhancement apparatus 900

Memory 901

Processor 902

Bus 904

Communication
interface 903

FIG. 22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109919869 A
- CN 109345485 A
- CN 110264424 A

**Non-patent literature cited in the description**

- **ATOUM YOUSEF et al.** Color-wise Attention Network for Low-light Image Enhancement. *XP093060601*
- **LORE KIN GWN et al.** LLNet: A deep autoencoder approach to natural low-light image enhancement. *XP029761044*
- **MICHAEL GHARBI et al.** Deep bilateral learning for real-time image enhancement. *XP 058372892*